# EUROPEAN PATENT APPLICATION

(11) **EP 4 742 579 A1**
(43) Date of publication of application: **13.05.2026**
(21) Application number: 24860310.2
(22) Date of filing: 22.08.2024
(51) Int. Cl.: H04L 5/00

(54) **METHOD AND APPARATUS FOR TRANSMITTING PPDU BY ACCESSING NON-PRIMARY CHANNEL IN WIRELESS LAN SYSTEM**

(30) Priority: 31.08.2023 KR 20230115651; 21.09.2023 KR 20230126432
(71) Applicant: LG Electronics Inc., Yeongdeungpo-gu Seoul 07336 (KR)
(72) Inventor: CHA, Dongju, Seoul 06772 (KR); JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); YOON, Yelin, Seoul 06772 (KR)
(74) Representative: Plasseraud IP
(86) International application number: PCT/KR2024/012497
(87) International publication number: WO 2025/048390

(57) **Abstract**

Proposed are a method and an apparatus for transmitting a PPDU by accessing a non-primary channel in a wireless LAN system. Specifically, a receiving STA performs backoff on a first non-primary channel. The receiving STA performs channel access for a second non-primary channel if the value of the backoff for the first non-primary channel is zero. The receiving STA transmits the PPDU to a transmitting STA through an idle channel from among the first and second non-primary channels. The first non-primary channel is a secondary 20 MHz channel capable of performing the backoff while a NAV is set in a primary 20 MHz channel. The second non-primary channel is a secondary channel other than the first non-primary channel in a BSS operating channel.

## Description

### TECHNICAL FIELD

The present disclosure relates to a technique for transmitting a PPDU by accessing a non-primary channel in a wireless LAN (WLAN) system, and more particularly, relates to a method and an apparatus for performing channel access for a non-primary channel and configuring a channel for transmitting a PPDU for an IDLE channel among non-primary channels.

### BACKGROUND ART

Next-generation Wi-Fi (e.g., IEEE 802.1 The and/or later) aims to support ultra-high reliability when transmitting signals to STAs. To achieve this, various technologies are being considered to support high throughput, low latency, and extended range. For example, a procedure for accessing non-primary channels may be performed.

### DISCLOSURE

### TECHNICAL PROBLEM

This specification proposes a method and apparatus for transmitting a PPDU by accessing a non-primary channel in a wireless LAN system.

### TECHNICAL SOLUTION

An example of the present disclosure proposes a method for transmitting a PPDU by accessing a non-primary channel.

The present embodiment may be performed in a network environment where a next-generation WLAN system (Ultra High Reliability (UHR) WLAN system or next Wi-Fi) is supported. The next-generation WLAN system is a WLAN system that improves the 802.1 The system and may satisfy backward compatibility with the 802.11be system.

The present embodiment is performed in a receiving STA, and the receiving STA may relate to at least one station (STA). A transmitting STA of the present embodiment may relate to an access point (AP).

The present embodiment proposes a method for transmitting and receiving a PPDU by performing back-off for a non-primary channel and performing channel access for another non-primary channel based on this. Particularly, the present embodiment proposes a method for performing channel access for a non-primary channel and configuring a channel for transmitting a PPDU for an IDLE channel among non-primary channels.

A receiving station (STA) performs back-off for a first non-primary channel.

The receiving STA performs channel access for a second non-primary channel based on a back-off value for the first non-primary channel being 0.

The receiving STA transmits a PPDU to a transmitting STA through an IDLE channel among the first and second non-primary channels.

The first non-primary channel is a secondary 20MHz channel capable of performing the back-off while a network allocation vector (NAV) is set in a primary 20MHz channel.

The second non-primary channel is a remaining secondary channel excluding the first non-primary channel in a basic service set (BSS) operating channel.

A configuration of the first and second non-primary channels is determined based on a size of the BSS operating channel and a location of the first non-primary channel.

For example, the present embodiment proposes a method for performing channel access for a non-primary channel (or a secondary channel) in a situation where a NAV (here, a basic NAV) is set in the primary 20MHz channel. However, a channel configuration may be newly defined to access the non-primary channel (or the secondary channel), and a rule may be defined as to which channel is included in the non-primary channel (or the secondary channel) to transmit and receive a PPDU having various bandwidth sizes.

### ADVANTAGEOUS EFFECTS

This embodiment defines the configuration of channels to be used for non-primary channel access. Based on this, it enables back-off to be performed relative to the non-primary channel and allows CCA to be performed for other non-primary channels, thereby enabling the transmission and reception of PPDUs over a wider bandwidth.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an example of channel access in an 802.11 wireless LAN system.
FIG. 16 illustrates an example of the basic procedure for SCA.
FIG. 17 shows the basic Secondary Channel Access operation process for an STA.
FIG. 18 illustrates an example channel configuration for Secondary Channel Access when the BSS Operating Bandwidth is 320 MHz and SCA P20 is the fifth 20 MHz channel.
FIG. 19 illustrates an example channel configuration for Secondary Channel Access when the BSS Operating Bandwidth is 160 MHz and SCA P20 is the second 20 MHz channel.
FIG. 20 illustrates an example channel configuration for Secondary Channel Access when the BSS Operating Bandwidth is 160MHz and SCA P20 is the third 20MHz channel.
FIG. 21 illustrates an example channel configuration for Secondary Channel Access when the BSS Operating Bandwidth is 160MHz and SCA P20 is the fifth 20MHz channel.
FIG. 22 illustrates an example channel configuration for Secondary Channel Access when the BSS Operating Bandwidth is 320MHz and SCA P20 is the second 20MHz channel.
FIG. 23 illustrates an example channel configuration for Secondary Channel Access when the BSS Operating Bandwidth is 320MHz and SCA P20 is the third 20MHz channel.
FIG. 24 illustrates an example channel configuration for Secondary Channel Access when the BSS Operating Bandwidth is 320MHz and SCA P20 is the ninth 20MHz channel.
FIG. 25 illustrates an example of transmitting a Wide Bandwidth Frame in Secondary Channel Access when the BSS Operating Bandwidth is 160MHz and SCA P20 is the second 20MHz channel.
FIG. 26 illustrates an example of transmitting a Wide Bandwidth Frame in Secondary Channel Access when the BSS Operating Bandwidth is 160MHz and SCA P20 is the third 20MHz channel.
FIG. 27 illustrates an example of transmitting a wide bandwidth frame in Secondary Channel Access when the BSS Operating Bandwidth is 160 MHz and SCA P20 is the fifth 20 MHz channel.
FIG. 28 is a flowchart illustrating the operation of the transmitting device according to this embodiment.
FIG. 29 is a flowchart illustrating the operation of the receiving device according to this embodiment.
FIG. 30 is a flowchart illustrating the procedure for a transmitting STA according to this embodiment to access a non-primary channel and receive a PPDU.
FIG. 31 is a flowchart illustrating the procedure for a receiving STA according to this embodiment to access a non-primary channel and transmit a PPDU.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

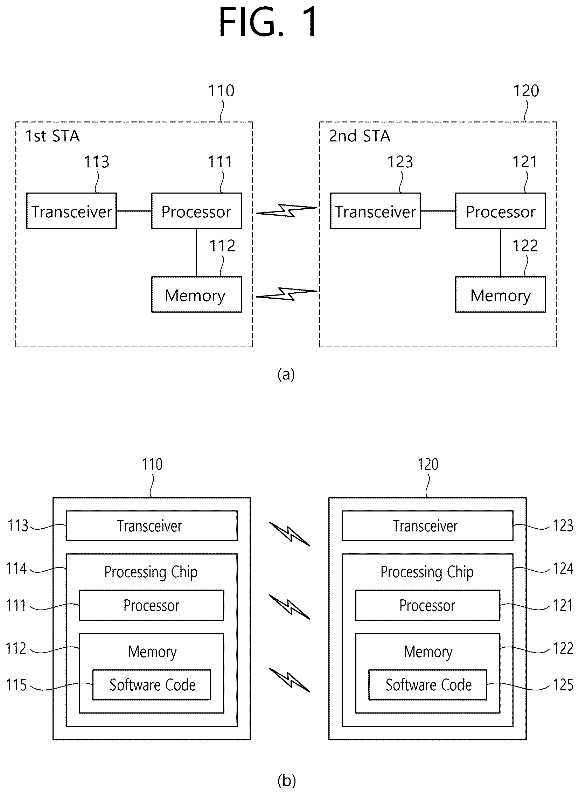

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

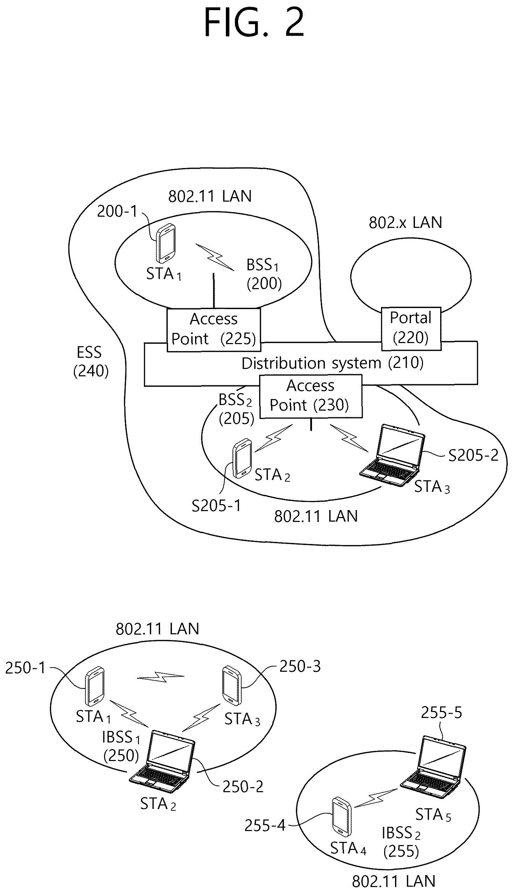

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

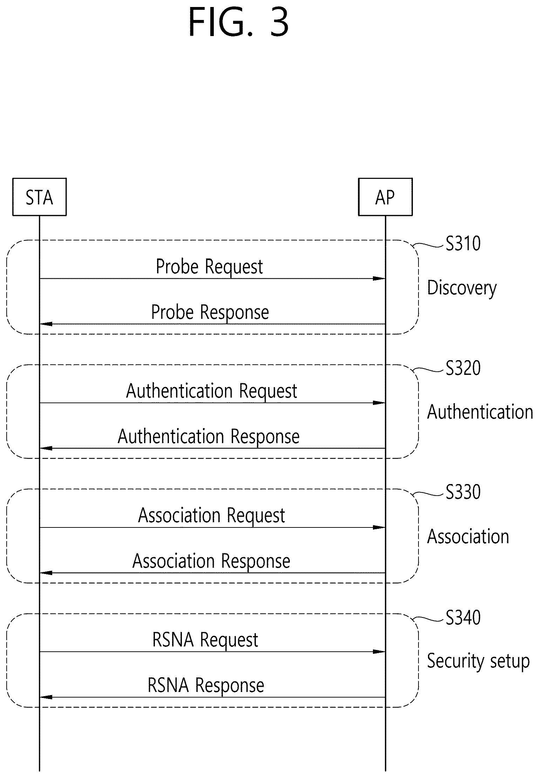

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

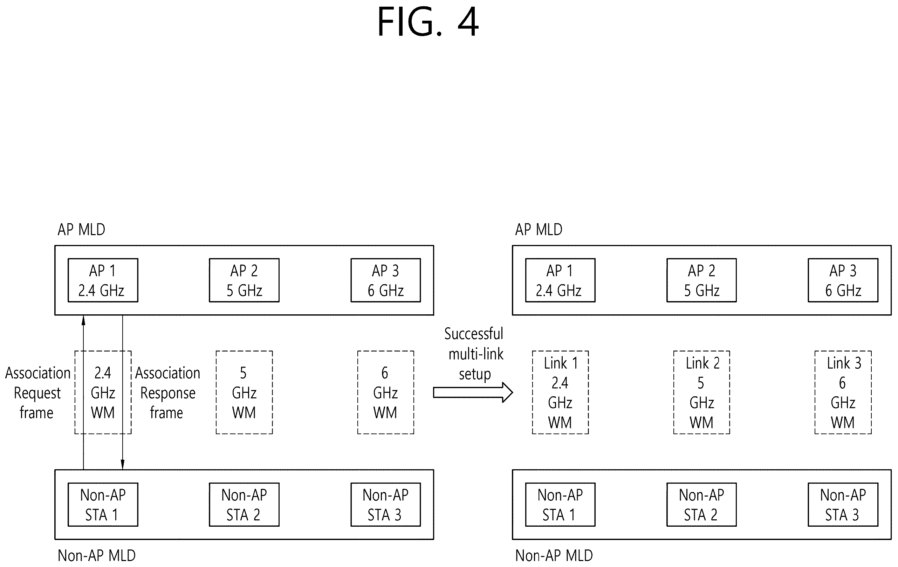

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

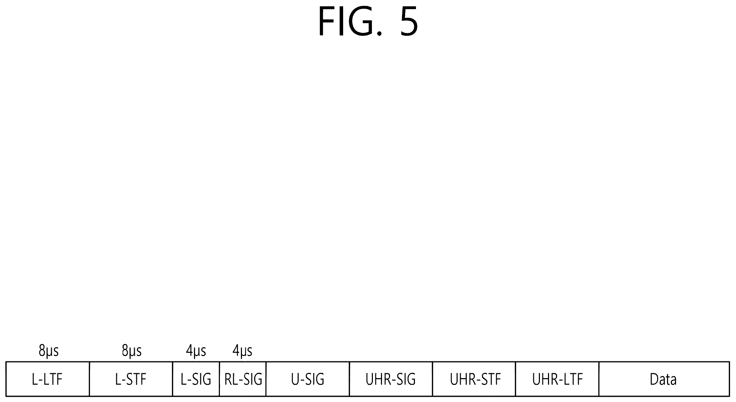

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

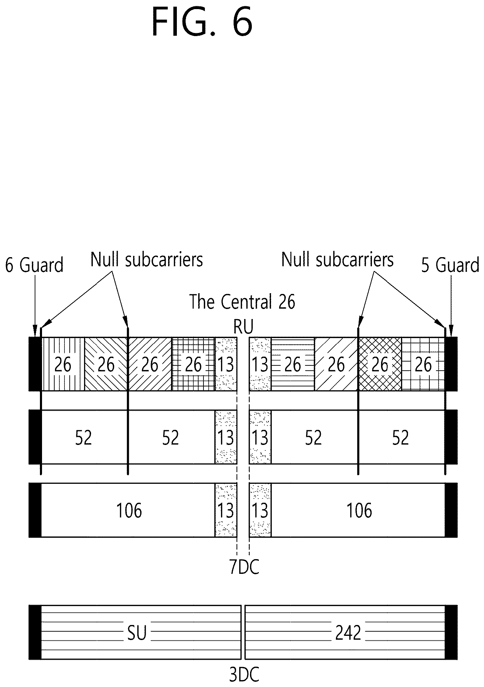

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

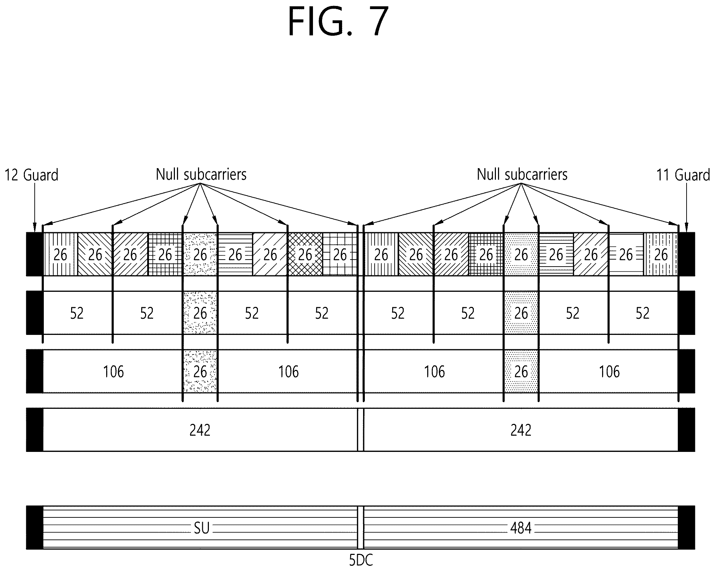

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

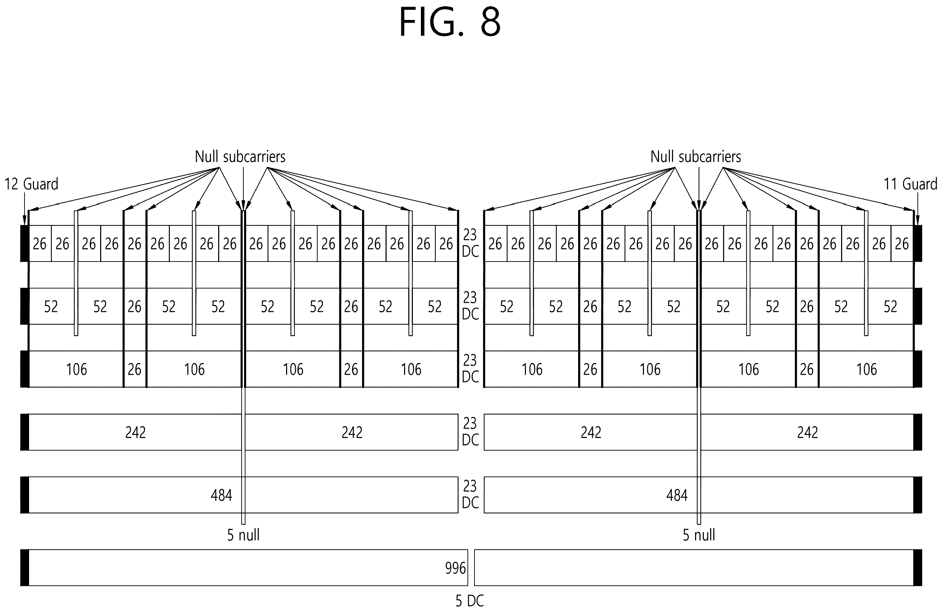

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

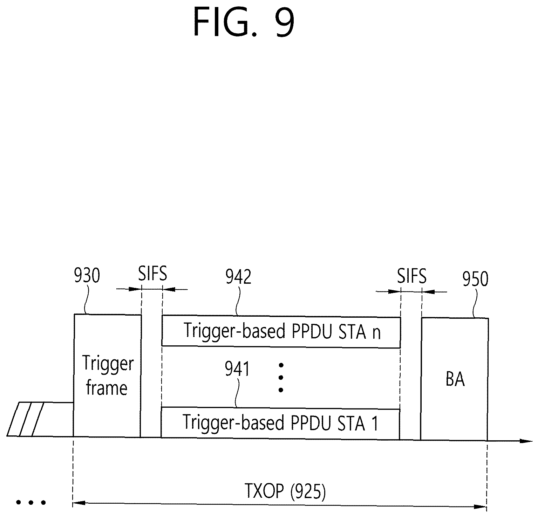

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

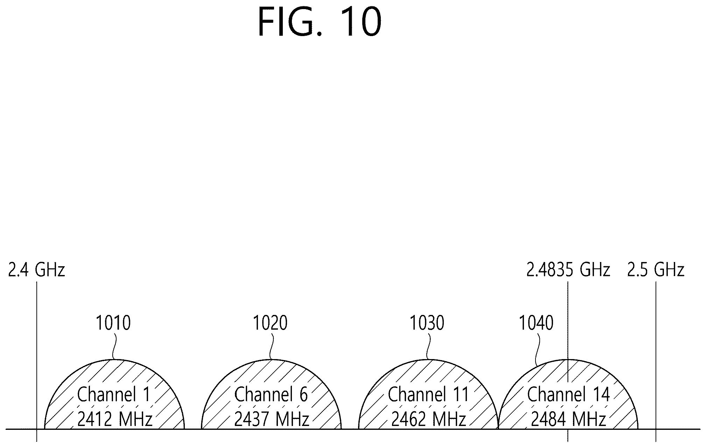

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index l may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

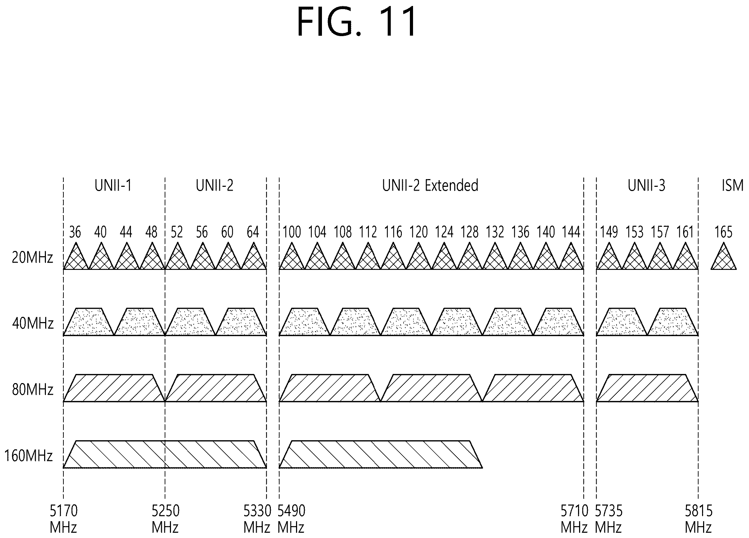

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

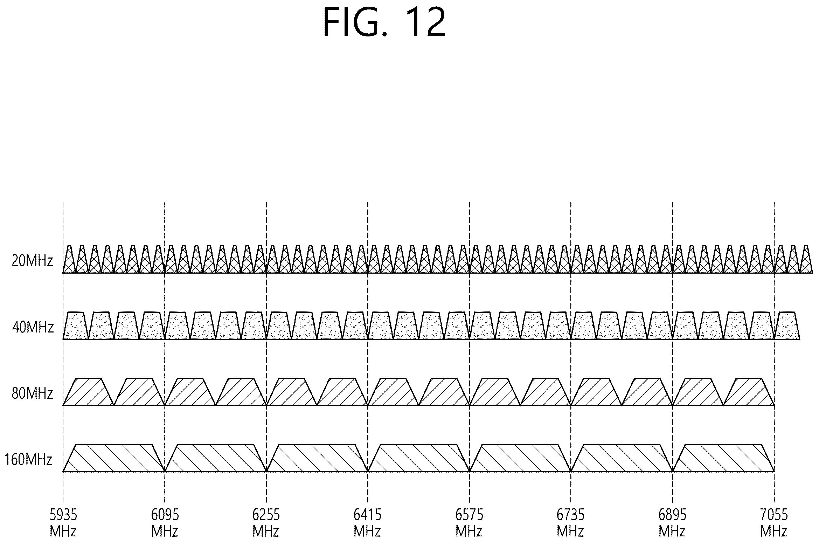

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

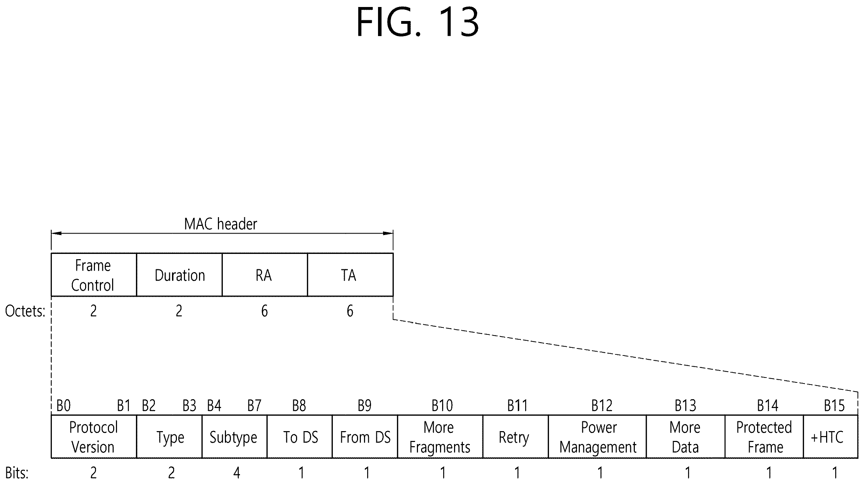

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response (0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

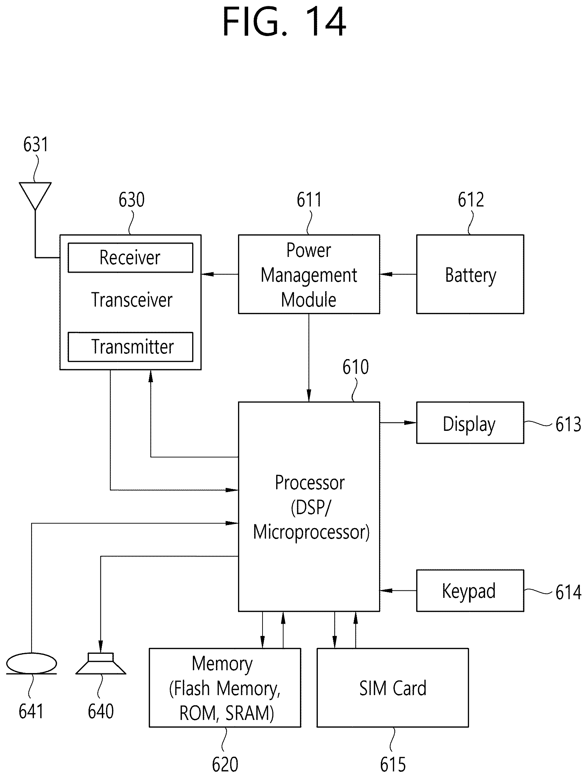

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

### 1. Secondary Channel

This specification proposes a process for secondary channel access, and first defines the primary channel and secondary channel as follows:

The primary channel is a common operating channel for all STAs that are members of the BSS. Based on a 20MHz, 40MHz, 80MHz, 160MHz, 80+80MHz, or 320MHz BSS, the primary channel is the primary 20MHz channel.

The secondary channel is a channel associated with the primary channel used to create a wider channel than the primary channel. Based on a 40MHz, 80MHz, 160MHz, 80+80MHz, or 320MHz BSS, the secondary channel is the secondary 20MHz channel. The secondary channel may also be referred to as a non-primary channel or a Non-Primary Channel Access (NPCA) primary channel.

### 2. Method for Performing Non-Primary Channel Access (NPCA) or Secondary Channel Access (SCA)

### 2.1 Problems with Prior Art

Currently, in 802.11, channel access is performed based on the primary channel. That is, based on the primary channel being IDLE and the back-off counter (BC) reaching 0, the STA can transmit a frame including the secondary channel that is IDLE. For this purpose, all STAs perform CCA (Clear Channel Assessment) with priority on the primary channel. Accordingly, the AP announces the primary channel of the BSS and always includes the primary channel to transmit management frames such as Beacon and Probe Response frames. This mechanism is effective for protection as frame exchange between all STAs and the AP is performed without interference, but on the other hand, based on only the primary channel being BUSY, access to the secondary channel that is IDLE is not possible, which reduces efficiency in terms of medium utilization.

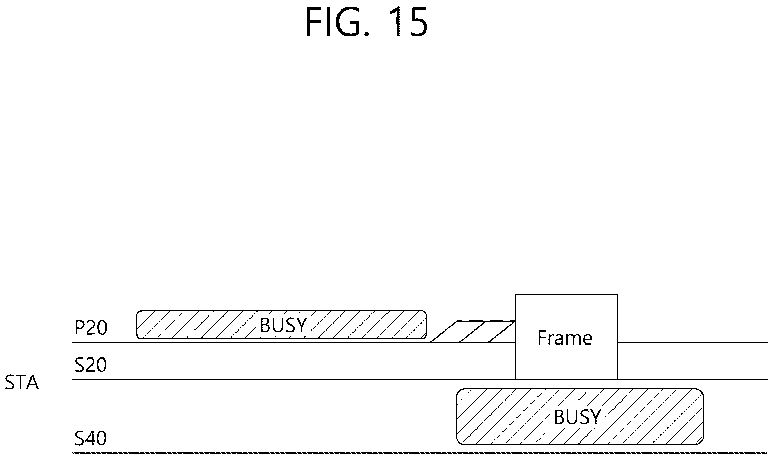

FIG. 15 illustrates an example of channel access in an 802.11 wireless LAN system.

FIG. 15 shows channel access based on the primary channel in 80MHz bandwidth. As shown in FIG. 15, this specification refers to the following:
P20: Primary 20MHz Channel
S20: Secondary 20MHz Channel (Based on the bandwidth being 40MHz, it means the remaining 20MHz secondary channel excluding P20)
S40: Secondary 40MHz Channel (Based on the bandwidth being 80MHz, it means the remaining 40MHz secondary channel excluding P20/S20)
S80: Secondary 80MHz Channel (Based on the bandwidth being 160MHz, it means the remaining 80MHz secondary channel excluding P20/S20/S40)
S160: Secondary 160MHz Channel (Based on the bandwidth being 320MHz, it means the remaining 160MHz secondary channel excluding P20/S20/S40/S80)
S320: Secondary 320MHz Channel (Based on the bandwidth being 640MHz, it means the remaining 320MHz secondary channel excluding P20/S20/S40/S80/S160)

Based on P20 being in a BUSY state due to CCA or NAV (Network Allocation Vector), the BC is not reduced and waits until it becomes IDLE. Through this back-off process, based on the BC reaching 0, the channel states of S20 and S40 are checked (i.e., CCA) and the frame is transmitted. In this example, based on S40 being BUSY, the STA transmits a frame corresponding to a 40MHz PPDU through P20 and S20.

As mentioned earlier, as shown in FIG. 15, based on P20 being BUSY and S20 and S40 being IDLE, 60MHz of bandwidth is wasted, reducing the efficiency of medium utilization. Therefore, this specification proposes a method for accessing the secondary channel based on P20 being BUSY.

### 2.2 Secondary Channel Access Method

### 2.2.1 STA's Capabilities for Secondary Channel Access

Basically, capabilities for Secondary Channel Access (SCA) can be defined, and the STA and AP inform each other of these. The capabilities of SCA can be determined by whether CCA (referred to as preamble detection (PD)) can be performed on the secondary channel (SCH) to decode a frame. That is, the NAV can also be set in the SCH through this. Originally, CCA could identify Wi-Fi frames performed on the primary channel (PCH).
- Level 0: No Back-off on SCH: CCA is performed on the SCH as before. That is, it is a method of performing CCA capable of detecting a Wi-Fi signal (referred to as guard interval detection (GID)) and CCA detecting a signal above a certain strength (referred to as energy detection (ED)).
- Level 1: Back-off on a SCH at a time: A method of performing PD on only one secondary channel at a time.
- Level 2: Back-off on SCHs at the same time: A method of performing PD on multiple secondary channels simultaneously.

These capabilities can be transmitted by being included in a UHR capabilities IE (Information Element), etc., in the Beacon, Probe Response frame, and (Re)Association Request frame from the AP perspective, and in the Probe Request frame and (Re)Association Request frame from the non-AP STA perspective.

### 2.2.2 Basic Procedure of Secondary Channel Access

Basically, based on an intra-BSS NAV being set in the PCH for the STA, it would be better not to perform SCA. For example, based on frame exchange with one STA within the TXOP acquired by the AP, other STAs have an intra-BSS NAV set based on the primary channel. At this time, based on the STA with the intra-BSS NAV set accessing the SCH and transmitting a frame to the AP, the AP cannot receive the frame during transmission (e.g., DL Data, Ack, etc.). Therefore, it is preferable for the STA to perform SCA only based on a Basic NAV being set in the PCH.

That is, the STA can perform SCA based on a Basic NAV being set in the PCH.

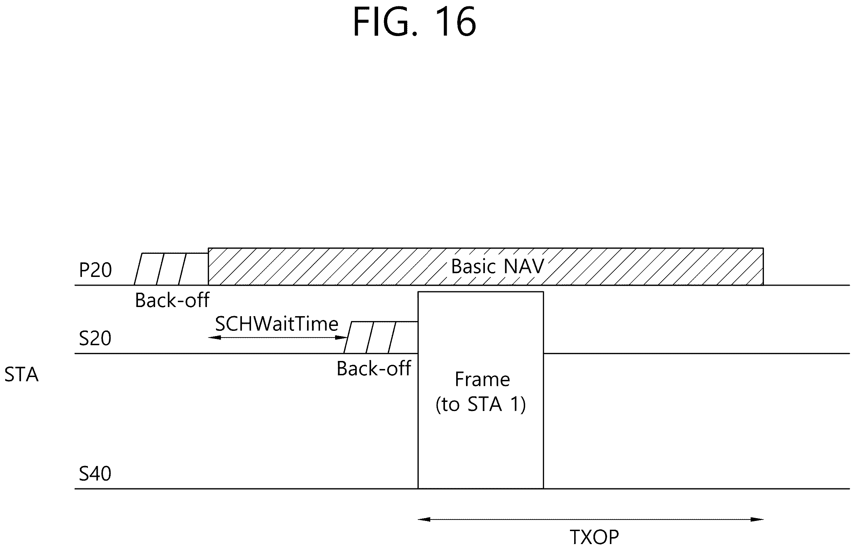

FIG. 16 illustrates an example of the basic procedure for SCA.

FIG. 16 shows a basic SCA process. Based on a Basic NAV being set while the STA is performing back-off in P20, back-off is performed in S20 at the point when the NAV is set. (A switching delay for PD from P20 to S20 may occur to perform PD in S20.) This represents a difference in the CCA method in terms of being able to perform CCA in S20, and it can be performed at all levels. The reason for performing back-off in S20 is that based on neighboring STAs having the same or similar operation channels as this STA being IDLE without performing back-off, a collision may occur if they transmit frames simultaneously, which could lead to a waste of channel resources.

Considerations when performing SCA are as follows:

### i) TXOP Setting Method - To end before the Basic NAV expiration time

Based on the Basic NAV in P20 expiring, CCA must basically be performed for P20. Therefore, the TXOP is set such that the end time of the TXOP in the SCH terminates before the Basic NAV expiration time.
=> Based on the TXOP being set to end after the Basic NAV expiration time, a problem occurs where the STA cannot receive frames because legacy STAs, etc., may transmit frames through P20 after the Basic NAV set for the STA. Also, based on the target beacon transmission time (TBTT) being set in the middle of the Basic NAV, a problem may arise because the AP must prepare to transmit a Beacon immediately after the Basic NAV, and the non-AP STA also fails to receive the Beacon from the AP on time and waits longer than scheduled. Therefore, by stipulating the condition that the TXOP is set so that the end time of the TXOP terminates before the Basic NAV expiration time, normal frame exchange can be performed in P20.
=> Based on there not being enough time to set the TXOP, the frame is not transmitted. That is, based on it being difficult to secure a TXOP equal to the interval between the point when the back-off counter (BC) in the SCH is 0 and the point when the Basic NAV in the PCH ends, the frame is not transmitted.

For example, as in the example of FIG. 16, based on performing back-off in S20 and the back-off counter reaching 0, the TXOP is made to end earlier than the point when the Basic NAV ends.

### ii) Frame Transmission Method - Presence of WaitTime

Previously, based on the back-off counter reaching 0 through back-off in P20, a frame could be transmitted through P20 and one or more IDLE SCHs depending on the IDLE/BUSY status of the SCHs. Therefore, for SCA, a change to the existing method is required to consider the situation where P20 is BUSY, and the back-off operation for this is as follows:
- The STA can perform back-off in one or more SCHs based on P20 being BUSY. Based on switching to S20 because P20 is busy, back-off can be performed immediately in S20 without a separate WaitTime. Additionally or alternatively, based on switching to S20, the STA may wait for a WaitTime before performing back-off in S20. The reason is as follows: several blindness issues may occur regarding SCA. A blindness issue refers to a state where the situation occurring in the channel to be switched to is not perceived. For example, based on a first STA in power saving mode changing from a doze state to an awake state, based on a second STA (a hidden node) transmitting a frame to a third STA within the transmission range of the first STA, the first STA does not perceive this. Thus, based on the first STA transmitting a frame, it may affect the third STA. Similarly, blindness issues that may occur regarding SCA are as follows:
- Case #1: Based on a Basic NAV being set in the PCH, then moving to the SCH to perform channel access.
- Case #2: Based on performing SCA in the SCH, then moving to the PCH to perform channel access.

To resolve the above issues, the operation process based on the presence of WaitTime before performing back-off is as follows:

First, each WaitTime can be defined. In this specification, it is referred to as SCHWaitTime for Case #1 and PCHWaitTime for Case #2. The AP may include this information in a Management frame including the Beacon and Probe Response, either within the UHR Operation IE or in the form of a new IE.
=> Each WaitTime can be indicated as a value having a certain unit (e.g., 32us, 64us).
=> Additionally or alternatively, the WaitTime may vary depending on the SCH where back-off is performed.
=> Additionally or alternatively, it may vary based on the Basic NAV value set in the PCH.
   - Based on a frame/PPDU capable of setting a NAV or a frame/PPDU addressed to the STA that started the timer being received while each WaitTime is operating, the WaitTime is terminated.
   - Based on the WaitTime reaching 0 without back-off being performed during the WaitTime, the STA can operate to transmit a frame such as RTS or MU-RTS.
   - Additionally or alternatively, back-off is performed while the WaitTime is operating, and the STA can transmit a frame such as RTS or MU-RTS.
=> Based on the frame transmission failing continuously, it is necessary to limit the number of transmissions of frames such as RTS frames for protection. Also, continuous failure increases the CW, which may reduce transmission opportunities for channel access. Furthermore, continuous unnecessary transmission leads to channel waste.

### <STA Operation Process #1 for SCA>

- Here, the STA can be a non-AP STA or an AP.

In this disclosure, the STA performing SCA can transmit a frame/PPDU on the SCH even during the time when the NAV is set in the PCH. For example, the STA can transmit a frame (or PPDU) excluding (or puncturing) the PCH on one or more SCHs in an IDLE state, which is determined through the results of back-off performed on one or more SCHs and CCA of one or more SCHs where back-off is not performed.

Additionally or alternatively, the STA can perform back-off in S20 immediately without a separate WaitTime based on switching to S20.

Additionally or alternatively, the STA can perform back-off to transmit a frame such as RTS or MU-RTS after the WaitTime ends (the point when WaitTime becomes 0) to resolve the blindness issue based on switching to S20.

=> Additionally or alternatively, the STA performs back-off while the WaitTime is operating and can transmit a frame such as RTS or MU-RTS.

Additionally or alternatively, a TXOP starting with the transmission of a frame or PPDU on the SCH can be set to end before the point when the NAV on the PCH ends. The TXOP length can be set/indicated through the duration/ID field of the corresponding frame. For example, the value of the duration/ID field can be set to a value that includes the time required for the exchange of frames or PPDUs following the frame or PPDU (including the inter-frame space (IFS)).

Additionally or alternatively, the EDCA Parameter Set for each SCH where back-off is performed can be set as the EDCA Parameter Set or MU EDCA Parameter Set in the PCH, or a new EDCA Parameter Set. This EDCA Parameter Set can be applied identically or differently to all SCHs.

In this disclosure, the STA receiving a frame transmitted through SCA can perform frame detection on the SCH even during the time when the NAV is set in the PCH. For example, based on having a frame to transmit, the STA may perform back-off on the SCH, and even based on having no frame to transmit, it may attempt to receive whether there is a frame addressed to itself on the SCA. Also, the STA may perform setting/resetting of the NAV based on the value of the duration/ID field of a frame detected on the SCH.

Additionally or alternatively, the EDCA Parameter Set for each SCH where back-off is performed can be set as the EDCA Parameter Set or MU EDCA Parameter Set in the PCH, or a new EDCA Parameter Set. This EDCA Parameter Set can be applied identically or differently to all SCHs.

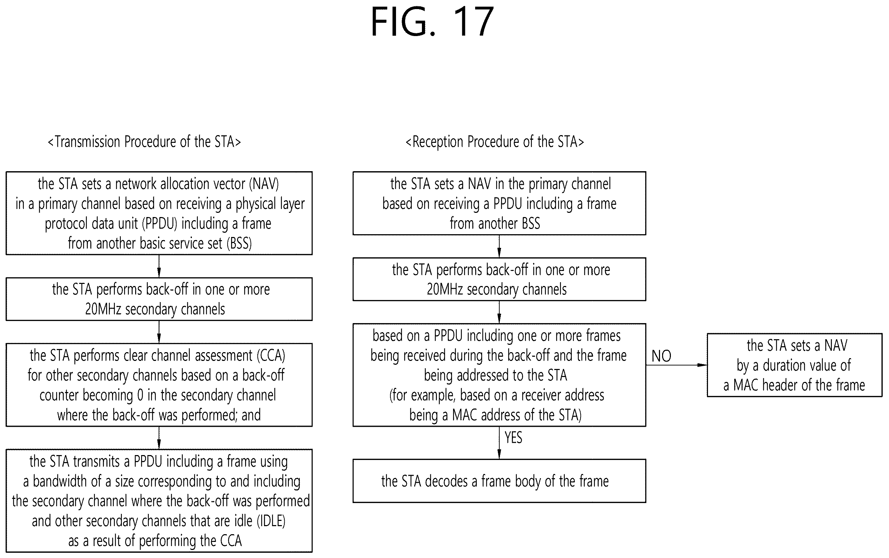

FIG. 17 shows the basic Secondary Channel Access operation process for an STA.

Referring to FIG. 17, the transmission process of the STA is as follows:
Based on the STA receiving a PPDU including a frame from another BSS, a (Basic) NAV is set in the primary channel. The STA performs back-off in one or more 20MHz secondary channels. Based on the back-off counter reaching 0 in the secondary channel where the STA performed back-off, the STA performs CCA for other secondary channels. The STA transmits a PPDU including a frame using a bandwidth of a size that includes the secondary channel where back-off was performed and other secondary channels that are IDLE as a result of performing CCA.

Referring to FIG. 17, the receiving process of the STA is as follows:
Based on the STA receiving a PPDU including a frame from another BSS, a (Basic) NAV is set in the primary channel. The STA performs back-off in one or more 20MHz secondary channels. Based on the STA receiving a PPDU including one or more frames while performing back-off, it determines whether the frame is addressed to the STA (i.e., determines whether the receiver address of the frame is the MAC address of the STA). Based on the frame being addressed to the STA, the STA decodes the frame body of the frame. Based on the frame not being addressed to the STA, the STA sets the NAV by the value of the duration field of the MAC header of the frame.

In addition, a channel composition for secondary channel access must be newly defined, and based on the newly defined channel composition, a rule must be defined to utilize secondary channel access regarding which channel should be used to transmit a frame in order to proceed with back-off based on S20 and transmit 20MHz/40MHz/80MHz PPDUs as shown in FIG. 16.

### 2.2.3 Channel Composition of Secondary Channel Access

To perform secondary channel access based on a Basic NAV being set in P20, back-off must be performed in one or more S20s as in P20. As mentioned above, based on the newly defined channel composition in secondary channel access, a rule can be defined regarding which channels to include to transmit frames having various bandwidth sizes based on the secondary channel performing back-off. First, the meaning of the 40/80/160/320MHz channel set is as follows: it refers to a set of 40/80/160/320MHz channels composed of continuous 20MHz units that do not overlap in the order from the lowest frequency to the highest frequency in channelization, for example, in ascending order from a frequency perspective.

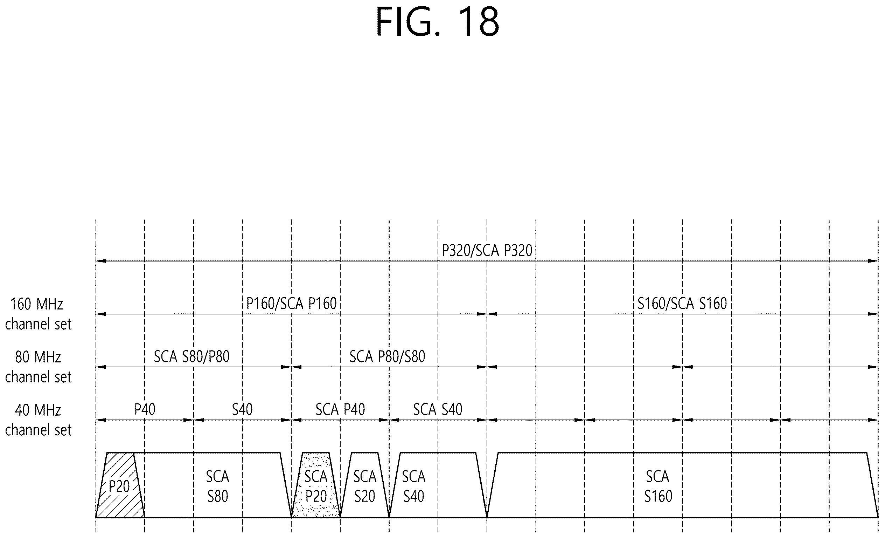

FIG. 18 illustrates an example channel configuration for Secondary Channel Access when the BSS Operating Bandwidth is 320 MHz and SCA P20 is the fifth 20 MHz channel.

Based on the BSS Operating Bandwidth being 320MHz-1 in FIG. 18, it can be confirmed that there are eight 40MHz channel sets, four 80MHz channel sets, two 160MHz channel sets, and one 320MHz channel set. For example, the first 80MHz channel set is composed of the first, second, third, and fourth 20MHz channels. Also, the second 80MHz channel set is composed of the fifth, sixth, seventh, and eighth 20MHz channels.

Additionally or alternatively, to configure the BSS Operating Bandwidth to 320MHz, there are two types of channelization for the 320MHz channel: 320MHz-1 and 320MHz-2. Accordingly, the 320MHz-2 channelization has the same channel composition as FIG. 18, identical to the 320MHz-1 channelization.

Definitions of channels for secondary channel access are as follows:
SCA P20: Secondary Channel Access Primary 20MHz channel, which is the reference channel for conducting back-off for secondary channel access based on a Basic NAV being applied to P20.
SCA S20: Secondary Channel Access Secondary 20MHz channel (meaning the remaining 20MHz channel excluding SCA P20 located in the same 40MHz channel set as SCA P20).
SCA P40: Secondary Channel Access Primary 40MHz channel (meaning the 40MHz channel including SCA P20 and SCA S20).
SCA S40: Secondary Channel Access Secondary 40MHz channel (meaning the remaining 40MHz channel excluding SCA P40 located in the same 80MHz channel set as SCA P40).
SCA P80: Secondary Channel Access Primary 80MHz channel (meaning the 80MHz channel including SCA P40 and SCA S40).
SCA S80: Secondary Channel Access Secondary 80MHz channel (meaning the remaining 80MHz channel excluding SCA P80 located in the same 160MHz channel set as SCA P80).
SCA P160: Secondary Channel Access Primary 160MHz channel (meaning the 160MHz channel including SCA P80 and SCA S80).
SCA S160: Secondary Channel Access Secondary 160MHz channel (meaning the 160MHz channel located in a different 160MHz channel set from SCA P160).
SCA P320: Secondary Channel Access Primary 320MHz channel (meaning the 320MHz channel including SCA P160 and SCA S160).
SCA S320: Secondary Channel Access Secondary 320MHz channel (meaning the 320MHz channel located in a different 320MHz channel set from SCA P320 based on the BSS Operating Bandwidth being 640MHz or higher).

For example, the channel composition in secondary channel access varies based on the BSS Operating Bandwidth and the location of SCA P20. In other words, the entire channel can be configured based on the size of the BSS Operating Bandwidth and whether the SCA P20 is the n-th 20MHz channel. An example of this can be explained as follows.

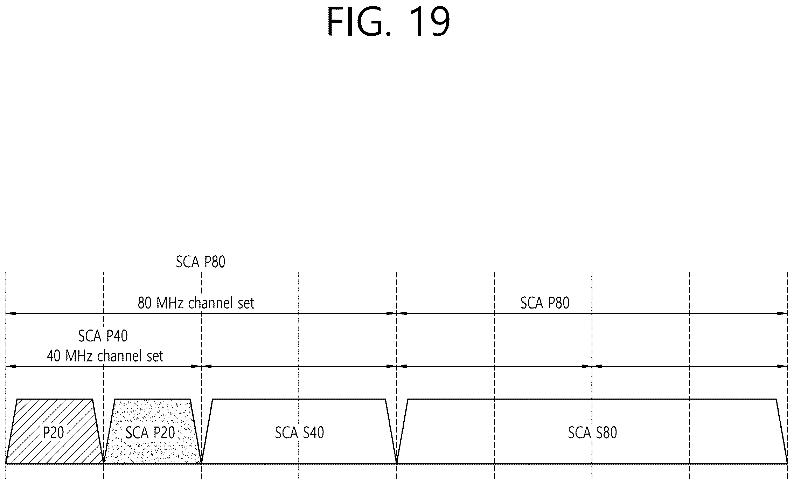

FIG. 19 illustrates an example channel configuration for Secondary Channel Access when the BSS Operating Bandwidth is 160 MHz and SCA P20 is the second 20 MHz channel.

FIG. 19 shows the secondary channel access channel composition based on the BSS Operating Bandwidth being 160MHz and the SCA P20 being the second 20MHz channel. The SCA P20 is the second channel in the order from the lowest frequency to the highest frequency, for example, in ascending order from a frequency perspective (including P20). As may be confirmed in FIG. 19, based on the SCA P20 being determined, the corresponding SCA S20, SCA P40, SCA S40, SCA P80, SCA S80, and SCA P160 are determined accordingly.

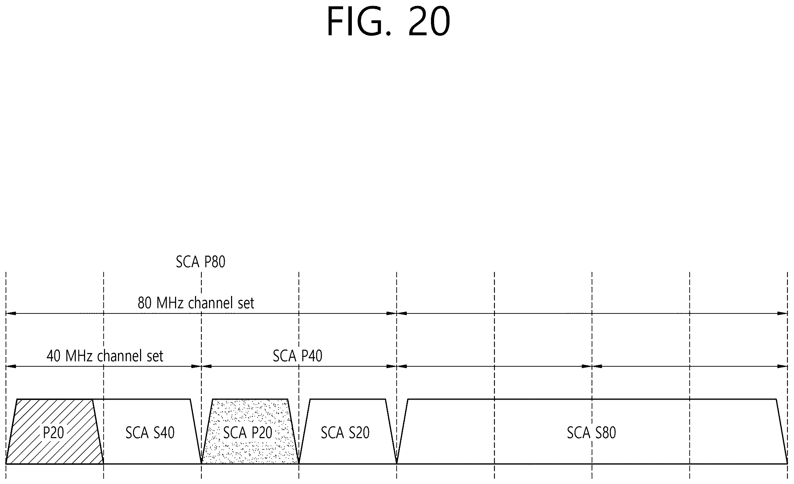

FIG. 20 illustrates an example channel configuration for Secondary Channel Access when the BSS Operating Bandwidth is 160MHz and SCA P20 is the third 20MHz channel.

FIG. 20 shows the secondary channel access channel composition based on the BSS Operating Bandwidth being 160MHz and the SCA P20 being the third 20MHz channel. The SCA P20 is the third channel in the order from the lowest frequency to the highest frequency, for example, in ascending order from a frequency perspective (including P20). As may be confirmed in FIG. 20, based on the SCA P20 being determined, the corresponding SCA S20, SCA P40, SCA S40, SCA P80, SCA S80, and SCA P160 are determined accordingly.

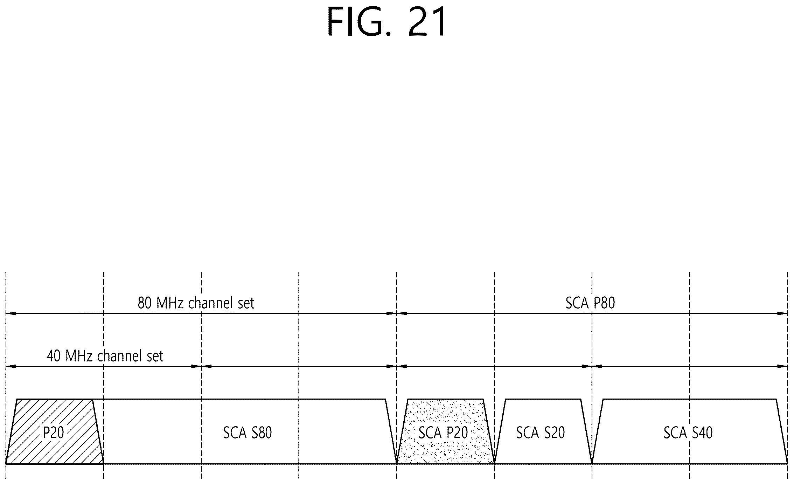

FIG. 21 illustrates an example channel configuration for Secondary Channel Access when the BSS Operating Bandwidth is 160MHz and SCA P20 is the fifth 20MHz channel.

FIG. 21 shows the secondary channel access channel composition based on the BSS Operating Bandwidth being 160MHz and the SCA P20 being the fifth 20MHz channel. The SCA P20 is the fifth channel in the order from the lowest frequency to the highest frequency, for example, in ascending order from a frequency perspective (including P20). As may be confirmed in FIG. 21, based on the SCA P20 being determined, the corresponding SCA S20, SCA P40, SCA S40, SCA P80, SCA S80, and SCA P160 are determined accordingly.

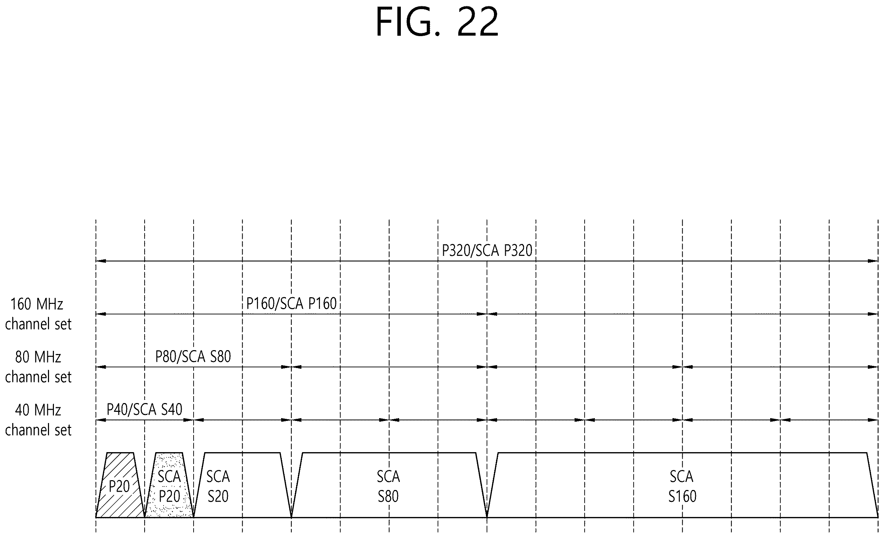

FIG. 22 illustrates an example channel configuration for Secondary Channel Access when the BSS Operating Bandwidth is 320MHz and SCA P20 is the second 20MHz channel.

FIG. 22 shows the secondary channel access channel composition based on the BSS Operating Bandwidth being 320MHz and the SCA P20 being the second 20MHz channel. The SCA P20 is the second channel in the order from the lowest frequency to the highest frequency, for example, in ascending order from a frequency perspective (including P20). As may be confirmed in FIG. 22, based on the SCA P20 being determined, the corresponding SCA S20, SCA P40, SCA S40, SCA P80, SCA S80, SCA P160, and SCA P320 are determined accordingly. Additionally or alternatively, accordingly, the 320MHz-1 channelization also has the same channel composition as FIG. 22, identical to the 320MHz-2 channelization.

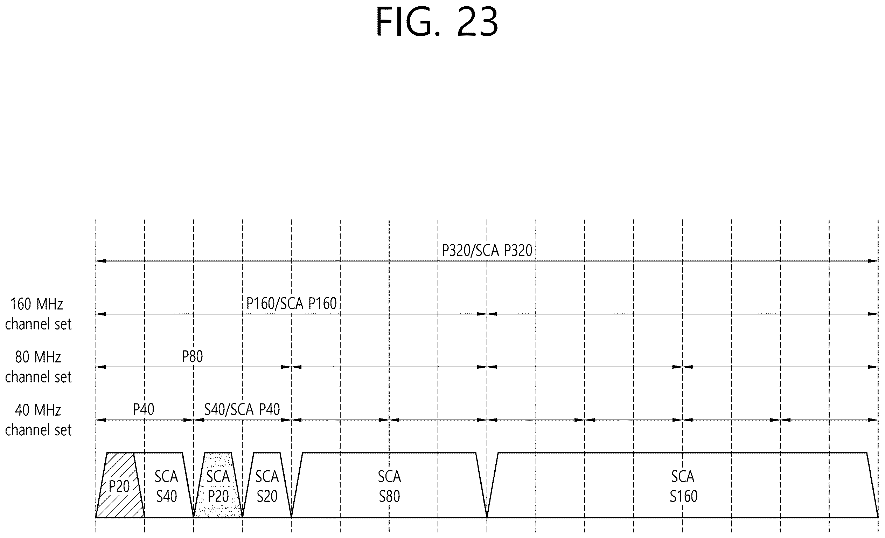

FIG. 23 illustrates an example channel configuration for Secondary Channel Access when the BSS Operating Bandwidth is 320MHz and SCA P20 is the third 20MHz channel.

FIG. 23 shows the secondary channel access channel composition based on the BSS Operating Bandwidth being 320MHz and the SCA P20 being the third 20MHz channel. The SCA P20 is the third channel in the order from the lowest frequency to the highest frequency, for example, in ascending order from a frequency perspective (including P20). As may be confirmed in FIG. 23, based on the SCA P20 being determined, the corresponding SCA S20, SCA P40, SCA S40, SCA P80, SCA S80, SCA P160, and SCA P320 are determined accordingly. Additionally or alternatively, accordingly, the 320MHz-1 channelization also has the same channel composition as FIG. 23, identical to the 320MHz-2 channelization.

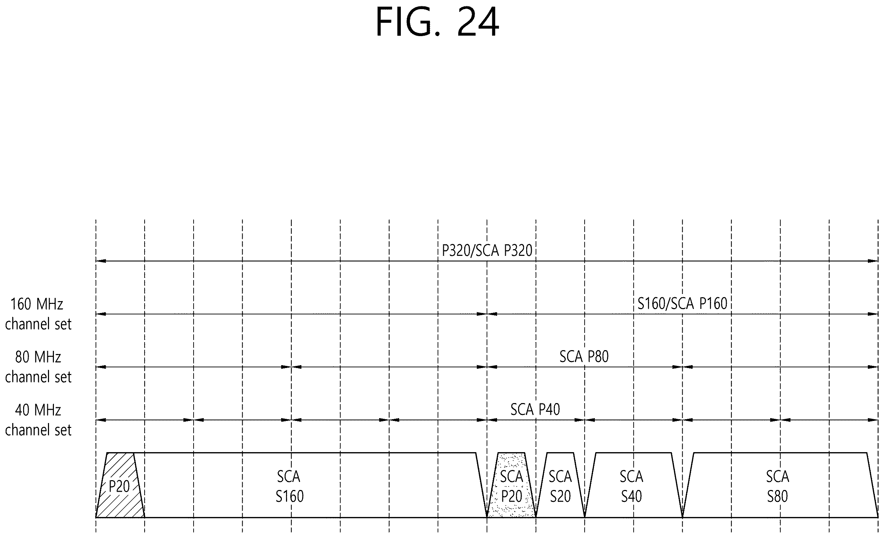

FIG. 24 illustrates an example channel configuration for Secondary Channel Access when the BSS Operating Bandwidth is 320MHz and SCA P20 is the ninth 20MHz channel.

FIG. 24 shows the secondary channel access channel composition based on the BSS Operating Bandwidth being 320MHz and the SCA P20 being the ninth 20MHz channel. The SCA P20 is the ninth channel in the order from the lowest frequency to the highest frequency, for example, in ascending order from a frequency perspective (including P20). As may be confirmed in FIG. 24, based on the SCA P20 being determined, the corresponding SCA S20, SCA P40, SCA S40, SCA P80, SCA S80, SCA P160, and SCA P320 are determined accordingly. Additionally or alternatively, accordingly, the 320MHz-1 channelization also has the same channel composition as FIG. 24, identical to the 320MHz-2 channelization.

### 2.2.4 Wide Bandwidth Frame Transmission for Secondary Channel Access

By applying the newly defined secondary channel access channel composition above, a rule regarding which channels to include to transmit a frame based on the SCA P20 performing back-off may be defined as follows. Additionally or alternatively, prior to transmitting the frame, physical CCA and virtual CCA (NAV setting) are performed in the SCA P20 as in the existing P20. Based on the SCA P20 being in a BUSY state due to CCA or NAV, etc., the STA does not reduce the BC and waits until it becomes IDLE. On the other hand, based on the SCA P20 being IDLE, the BC is reduced, and based on a certain period (e.g., PIFS) before the BC reaches 0, a second type of CCA may be performed on other SCHs besides the SCA P20 that performed back-off to determine whether the channel is IDLE or BUSY. Based on that determination, wide bandwidth frame transmission in secondary channel access is performed in the following manner.
20MHz PPDU: Transmit PPDU including SCA P20
40MHz PPDU: Transmit PPDU including SCA P40
80MHz PPDU: Transmit PPDU including SCA P80
160MHz PPDU: Transmit PPDU including SCA P160
320MHz PPDU: Transmit PPDU including SCA P320

When transmitting a PPDU, based on the results of the aforementioned CCA, if a puncturing pattern is supported for a busy channel, the corresponding channel is transmitted including signaling indicating that it has been punctured. In the table below, in the puncturing pattern for PPDUs of 160MHz or less, 1 means that the 20MHz channel is not punctured, and x means that the 20MHz channel is punctured. On the other hand, in the puncturing pattern for PPDUs of 320MHz or less, 1 means that the 40MHz channel is not punctured, and x means that the 40MHz channel is punctured. Each is described in ascending order from lowest to highest in terms of frequency.

**[Table 1]**

| **PPDU bandwidth** | **Cases** | **Puncturing pattern (RU or MRU Index)** | **Field value** |
|---|---|---|---|
| **20 MHz** | No puncturing | [1] (242-tone RU 1) | 0 |
| **40 MHz** | No puncturing | [1 1](484-tone RU 1) | 0 |
| **80 MHz** | No puncturing | [1111] (996-tone RU 1) | 0 |
| | 20 MHz puncturing | [x 1 1 1] (484+242-tone MRU 1) | 1 |
| | | [1 x 1 1] (484+242-tone MRU 2) | 2 |
| | | [1 1 x 1] (484+242-tone MRU 3) | 3 |
| | | [1 1 1 x] (484+242-tone MRU 4) | 4 |

**[Table 2]**

| **PPDU bandwidth** | **Cases** | **Puncturing pattern (RU or MRU Index)** | **Field value** |
|---|---|---|---|
| **160 MHz** | No puncturing | [1 1 1 1 1 1 1 1] (2x996-tone RU 1) | 0 |
| | 20 MHz puncturing | [x 1 1 1 1 1 1 1] (996+484+242-tone MRU 1) | 1 |
| | | [1 x 1 1 1 1 1 1] (996+484+242-tone MRU 2) | 2 |
| | | [1 1 x 1 1 1 1 1](996+484+242-tone MRU 3) | 3 |
| | | [1 1 1 x 1 1 1 1](996+484+242-tone MRU 4) | 4 |
| | | [1 1 1 1 x 1 1 1](996+484+242-tone MRU 5) | 5 |
| | | [1 1 1 1 1 x 1 1](996+484+242-tone MRU 6) | 6 |
| | | [1 1 1 1 1 1 x 1](996+484+242-tone MRU 7) | 7 |
| | | [1 1 1 1 1 1 1 x](996+484+242-tone MRU 1) | 8 |
| | 40 MHz puncturing | [x x 1 1 1 1 1 1] (996+484-tone MRU 1) | 9 |
| | | [1 1 x x 1 1 1 1] (996+484-tone MRU 2) | 10 |
| | | [1 1 1 1 x x 1 1] (996+484-tone MRU 3) | 11 |
| | | (996+484-tone [1 1 1 1 1 1 x x] (996+484-tone MRU 4) | 12 |

**[Table 3]**

| **PPDU bandwidth** | **Cases** | **Puncturing pattern (RU or MRU Index)** | **Field value** |
|---|---|---|---|
| | No puncturing | [1 1 1 1 1 1 1 1] (4x996-tone RU 1) | 0 |
| | 40 MHz puncturing | [x 1 1 1 1 1 1 1] (3x996+484-tone MRU 1) | 1 |
| | | [1 x 1 1 1 1 1 1] (3x996+484-tone MRU 2) | 2 |
| | | [1 1 x 1 1 1 1 1](3x996+484-tone MRU 3) | 3 |
| | | [1 1 1 x 1 1 1 1](3x996+484-tone MRU 4) | 4 |
| | | [1 1 1 1 x 1 1 1](3x996+484-tone MRU 5) | 5 |
| **320 MHz** | | [1 1 1 1 1 x 1 1](3x996+484-tone MRU 6) | 6 |
| | | [1 1 1 1 1 1 x 1](3x996+484-tone MRU 7) | 7 |
| | | [1 1 1 1 1 1 1 x](3x996+484-tone MRU 1) | 8 |
| | 80 MHz puncturing | [x x 1 1 1 1 1 1] (3x996-tone MRU 1) | 9 |
| | | [1 1 x x 1 1 1 1] (3x996-tone MRU 2) | 10 |
| | | [1 1 1 1 x x 1 1] (3x996-tone MRU 3) | 11 |
| | | [1 1 1 1 1 1 x x] (3x996-tone MRU 4) | 12 |

**[Table 4]**

| **PPDU bandwidth** | **Cases** | **Puncturing pattern (RU or MRU Index)** | **Field value** |
|---|---|---|---|
| | | [x x x 1 1 1 1 1] (2x996+484-tone MRU 7) | 13 |
| | | [x x 1 x 1 1 1 1] (2x996+484-tone MRU 8) | 14 |
| | | [x x 1 1 x 1 1 1](2x996+484-tone MRU 9) | 15 |
| | | [x x 1 1 1 x 1 1](2x996+484-tone MRU 10) | 16 |
| | | [x x 1 1 1 1 x 1](2x996+484-tone MRU 11) | 17 |
| **320 MHz** | Concurrent 80 MHz and 40 MHz puncturing | [x x 1 1 1 1 1 x](2x996+484-tone MRU 12) | 18 |
| | | [x 1 1 1 1 1 x x](2x996+484-tone MRU 1) | 19 |
| | | [1 x 1 1 1 1 x xJ(2x996+484-tone MRU 2) | 20 |
| | | [1 1 x 1 1 1 x xJ(2x996+484-tone MRU 3) | 21 |
| | | [1 1 1 x 1 1 x x] (2x996+484-tone MRU 4) | 22 |
| | | [1 1 1 1 x 1 x x] (2x996+484-tone MRU 5) | 23 |
| | | [1 1 1 1 1 x x x] (2x996+484-tone MRU 6) | 24 |

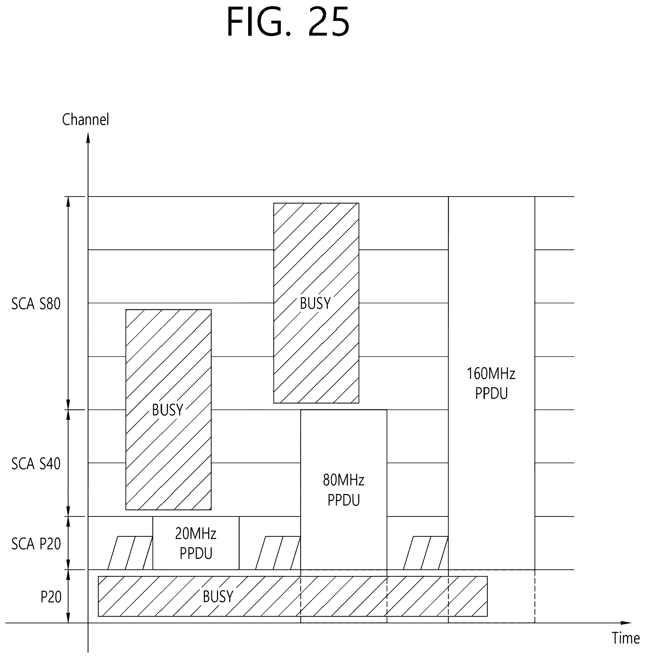

FIG. 25 illustrates an example of transmitting a Wide Bandwidth Frame in Secondary Channel Access when the BSS Operating Bandwidth is 160MHz and SCA P20 is the second 20MHz channel.

FIG. 25 shows an example of wide bandwidth frame transmission by performing secondary channel access based on the channel composition of FIG. 19. Dotted rectangles in FIG. 25 indicate that the PPDU is punctured. Based on a situation where P20 is busy, the STA or AP transmits a frame by performing back-off based on the SCA P20. As may be confirmed in FIG. 25, based on transmitting PPDUs of different bandwidth sizes, the channel composition differs based on the location of the SCA S20, but PPDUs having various bandwidths may be transmitted according to the previously defined PPDU transmission rules. First, based on the back-off counter value of the SCA P20 reaching 0, the channel states for the remaining secondary 20MHz channels are checked (i.e., CCA) and a frame is transmitted. Based on transmitting a 20MHz PPDU, the PPDU is transmitted including only the SCA P20. Next, based on transmitting an 80MHz PPDU, the PPDU is transmitted including the SCA P80, which is a combination of the SCA P40 and SCA S40; based on P20 being included in the SCA P80, the 80MHz PPDU is transmitted including signaling that P20 has been punctured. Based on transmitting a 160MHz PPDU, the PPDU is transmitted including the SCA P160, which is a combination of the SCA P80 and SCA S80. At this time, since P20 is in a busy state, in this case, a 160MHz PPDU including signaling that P20 has been punctured is transmitted. As such, based on transmitting a PPDU of 80MHz or higher according to the previously defined rule, based on P20 being included, the PPDU is transmitted including signaling that P20 has been punctured.

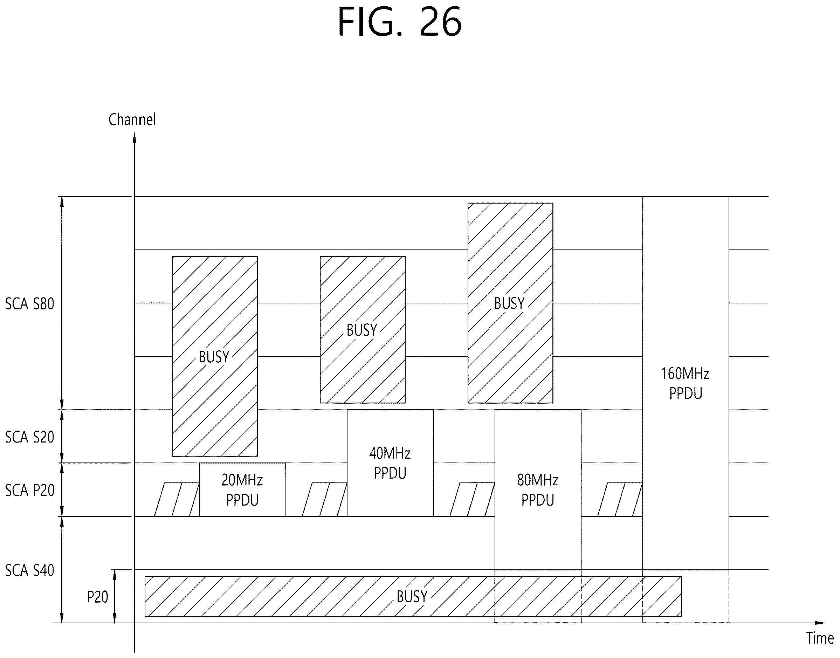

FIG. 26 illustrates an example of transmitting a Wide Bandwidth Frame in Secondary Channel Access when the BSS Operating Bandwidth is 160MHz and SCA P20 is the third 20MHz channel.

FIG. 26 shows an example of wide bandwidth frame transmission by performing secondary channel access based on the channel composition of FIG. 20. First, based on the back-off counter value of the SCA P20 reaching 0, the channel states for the remaining secondary 20MHz channels are checked (for example, CCA) and a frame is transmitted. Based on transmitting a 20MHz PPDU, the PPDU is transmitted including only the SCA P20. Based on transmitting a 40MHz PPDU, it is transmitted by utilizing the SCA P40, which is a combination of the SCA P20 and SCA S20. Next, based on transmitting an 80/160MHz PPDU, the PPDU is transmitted including signaling that P20 has been punctured because P20 is included in the 80/160MHz PPDU.

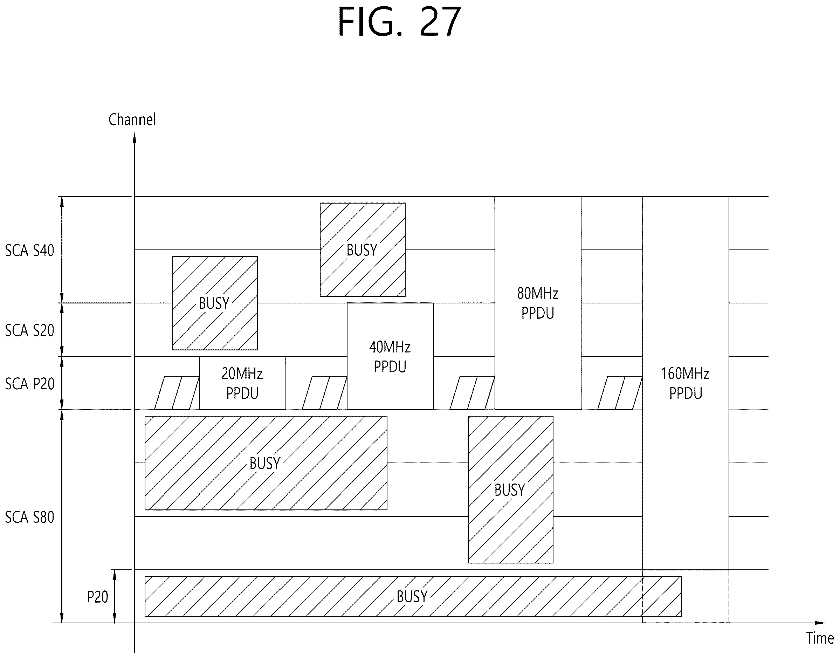

FIG. 27 illustrates an example of transmitting a wide bandwidth frame in Secondary Channel Access when the BSS Operating Bandwidth is 160 MHz and SCA P20 is the fifth 20 MHz channel.

FIG. 27 shows an example of wide bandwidth frame transmission by performing secondary channel access based on the channel composition of FIG. 21. First, based on the back-off counter value of the SCA P20 reaching 0, the channel states for the remaining secondary 20MHz channels are checked (i.e., CCA) and a frame is transmitted. It may be confirmed that 20/40/80MHz PPDUs are transmitted based on the aforementioned rule. Based on transmitting a 160MHz PPDU, the PPDU is transmitted including signaling that P20 has been punctured because P20 is included in the 160MHz PPDU.

For example, this embodiment transmits a wide bandwidth frame for IDLE channels by performing CCA on other SCHs besides the SCA P20 that performed back-off, and additionally transmits a busy channel including signaling that it has been punctured.

### <STA Operation Process #2 for SCA>

- The STA may be a non-AP STA or an AP.

In this disclosure, the STA performing SCA may transmit a frame/PPDU on the SCH even during the time when the NAV is set in the PCH. For example, the STA may transmit a frame or PPDU excluding (or puncturing) the PCH on one or more SCHs in an IDLE state, which is determined through the results of back-off performed on one or more SCHs and CCA of one or more SCHs where back-off is not performed.

Additionally or alternatively, the STA may perform back-off in S20 immediately without a separate WaitTime based on switching to S20.

Additionally or alternatively, the STA may perform back-off to transmit a frame such as RTS or MU-RTS after the WaitTime ends (the point when WaitTime becomes 0) to resolve the blindness issue based on switching to S20.

=> Additionally or alternatively, the STA performs back-off while the WaitTime is operating and may transmit a frame such as RTS or MU-RTS.

Additionally or alternatively, a TXOP starting with the transmission of a frame or PPDU on the SCH may be set to end before the point when the NAV on the PCH ends. The TXOP length may be set/indicated through the duration/ID field of the corresponding frame. For example, the value of the duration/ID field may be set to a value that includes the time required for the exchange of frames or PPDUs following the frame or PPDU (including the inter-frame space (IFS)).

Additionally or alternatively, the EDCA Parameter Set for each SCH where back-off is performed may be set as the EDCA Parameter Set or MU EDCA Parameter Set in the PCH, or a new EDCA Parameter Set. This EDCA Parameter Set may be applied identically or differently to all SCHs.

Additionally or alternatively, based on the remaining SCH(s) excluding the SCA P20 being determined as BUSY according to the CCA result as in FIG. 25, the STA transmits a frame/PPDU through the SCA P20.

Additionally or alternatively, based on the SCA S80 and P20 being BUSY as in FIG. 25, the STA transmits a frame/PPDU through the SCA P80 including signaling that P20 has been punctured.

Additionally or alternatively, based on only P20 being BUSY as in FIG. 25, the STA transmits a frame/PPDU through the SCA P160 including signaling that P20 has been punctured.

In this disclosure, the STA receiving a frame transmitted through SCA may perform frame detection on the SCH even during the time when the NAV is set in the PCH. For example, the STA may perform back-off on the SCH based on having a frame to transmit, and even based on having no frame to transmit, it may attempt to receive whether there is a frame addressed to itself on the SCA. Also, the STA may perform setting/resetting of the NAV based on the value of the duration/ID field of a frame detected on the SCH.

Additionally or alternatively, the EDCA Parameter Set for each SCH where back-off is performed may be set as the EDCA Parameter Set or MU EDCA Parameter Set in the PCH, or a new EDCA Parameter Set. This EDCA Parameter Set may be applied identically or differently to all SCHs.

The PPDU through which signals of this specification are transmitted/received may include a data field.

The data field includes user data and may include a packet for a higher layer. For example, it may include an MPDU (MAC Frame).

For example, based on supporting a channel access operation on a secondary channel, the duration/ID field in the MAC header included in the MPDU may be set to a value including the time length of a frame exchange following a frame or PPDU transmitted excluding (or puncturing) the PCH. For example, the TXOP end point determined based on the value of the duration/ID field may be set before the end point of the NAV set on the primary channel.

Also, as in FIG. 1, the transmitting device and the receiving device may each include a memory, a processor, and a transceiver.

The memory may store information regarding a plurality of Secondary Channel Accesses described in this specification.

The processor may perform back-off in a Secondary Channel based on information stored in the memory, generate various RUs, and configure a PPDU. The processor may be configured to perform all/part of <STA Operation Process #1 for SCA> and <STA Operation Process #2 for SCA> described in this specification.

In particular, the transceiver (113) of the transmitting device includes an antenna and may perform analog signal processing. Specifically, the processor (111) may control the transceiver (113) to transmit the PPDU generated by the processor (111).

Alternatively, the processor (111) may generate a transmission PPDU and store information regarding the transmission PPDU in the memory (112).

For example, the processor (111) of the transmitting device may be configured to perform the operation of the transmitting STA according to the examples of this disclosure. For example, the processor (111) may be configured to transmit a frame on the SCH through the transceiver (113) during the time the NAV is set in the PCH. For example, the processor (111) may be configured to perform back-off on the SCH through the transceiver (113) and determine one or more SCHs in an IDLE state. For example, the processor (111) may be configured to transmit a frame/PPDU excluding/puncturing the PCH on one or more SCHs through the transceiver (113). Additionally or alternatively, the processor (111) may be configured to generate a frame including a duration/ID field set to a value such that a TXOP starting with the transmission of a frame/PPDU on the SCH ends before the point when the NAV on the PCH ends.

Also, the transceiver (123) of the receiving device may receive a PPDU based on the control of the processor (121). For example, the transceiver (123) may include a plurality of detailed units (not shown). For example, the transceiver (123) may include at least one receiving antenna and may include a filter for the corresponding receiving antenna.

The PPDU received through the transceiver (123) may be stored in the memory (122). The processor (121) may process decoding of the received PPDU through the memory (122). The processor (121) may acquire control information (e.g., SIG) regarding BW/Tone-Plan/RU included in the PPDU and store the acquired control information in the memory (122).

The processor (121) may perform decoding of the received PPDU. Also, the processor (121) may process decoded data. For example, the processor (121) may perform a processing operation of delivering information regarding a decoded data field to a higher layer (e.g., MAC layer). Also, based on generation of a signal being instructed from the higher layer to the PHY layer in response to data delivered to the higher layer, a subsequent operation may be performed.

For example, the processor parses a MAC PDU acquired through PHY decoding of the DATA field of the PPDU received through the transceiver.

For example, the processor (121) of the receiving device may be configured to perform the operation of the receiving STA according to the examples of this disclosure. For example, the processor (121) may attempt frame detection on the SCH through the transceiver (123) during the time the NAV is set on the PCH. The processor (121) may be configured to decode/parse a frame addressed to itself based on the frame received on the SCH. Also, the processor (121) may be configured to set/reset the NAV according to the value of the duration/ID field of a frame not addressed to itself.

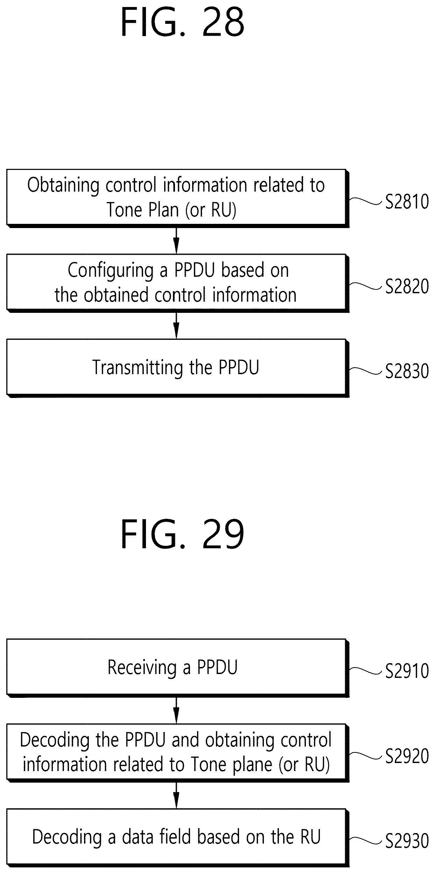

FIG. 28 is a flowchart illustrating the operation of a transmitting device according to the present embodiment.

The example of FIG. 28 may be performed by a transmitting device (AP and/or non-AP STA).

Some of each step (or detailed sub-step to be described later) of the example of FIG. 28 may be skipped/omitted.

Through step S2810, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2820, the transmitting device may construct/generate a PPDU based on the acquired control information. Configuring/generating the PPDU may include configuring/generating each field of the PPDU. That is, step S2820 includes configuring the EHT-SIG field including control information about the tone plan. That is, step S2820 includes configuring a field including control information (e.g., N bitmap) indicating the size/position of the RU; and/or configuring a field including an identifier of an STA receiving the RU (e.g., AID).

Also, step S2820 may include generating an STF/LTF sequence transmitted through a specific RU. The STF/LTF sequence may be generated based on a preset STF generation sequence/LTF generation sequence.

Also, step S2820 may include generating a data field (i.e., MPDU) transmitted through a specific RU.

The transmitting device may transmit the PPDU constructed through step S2820 to the receiving device based on step S2830.

While performing step S2830, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 29 is a flowchart illustrating the operation of the receiving apparatus/device according to the present embodiment.

The aforementioned PPDU may be received according to the example of FIG. 29.

The example of FIG. 29 may be performed by a receiving apparatus/device (AP and/or non-AP STA).

Some of each step (or detailed sub-step to be described later) of the example of FIG. 29 may be skipped/omitted.

The receiving device (receiving STA) may receive all or part of the PPDU through step S2910. The received signal may be in the form of FIG. 5.

A sub-step of step S2910 may be determined based on step S2830 of FIG. 28. That is, in step S2910, an operation of restoring the result of the CSD, Spatial Mapping, IDFT/IFFT operation, and GI insertion operation applied in step S2830 may be performed.

In step S2920, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2930, the receiving device may decode the remaining part of the PPDU based on information about the tone plan (i.e., RU) acquired through step S2920. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2930 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 29.

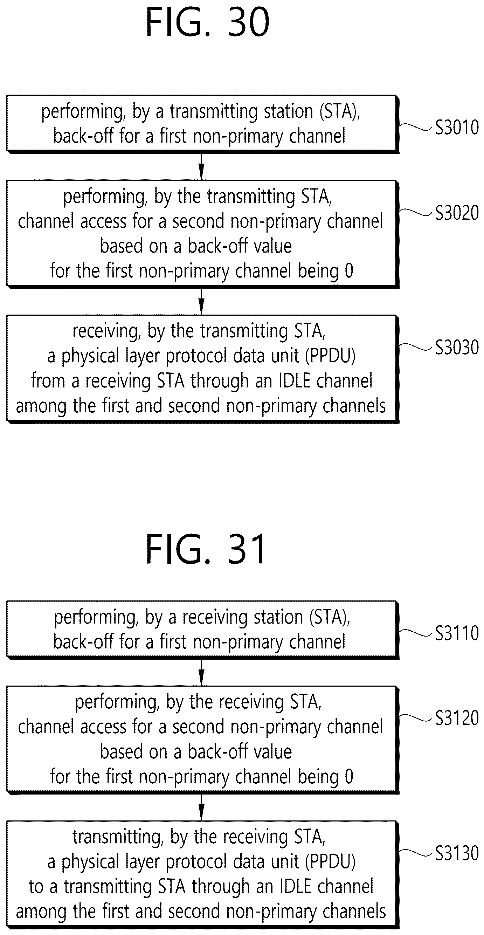

FIG. 30 is a flowchart illustrating the procedure for a transmitting STA according to this embodiment to access a non-primary channel and receive a PPDU.

The example of FIG. 30 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 30 is performed by a transmitting station (STA), and the transmitting STA may correspond to an access point (AP). The receiving STA in FIG. 30 may correspond to at least one station (STA).

This embodiment proposes a method for transmitting and receiving a physical layer protocol data unit (PPDU) by performing back-off for a non-primary channel and performing channel access for other non-primary channels based on this. In particular, this embodiment proposes a method for performing channel access for non-primary channels and configuring a channel to transmit a PPDU for an idle (IDLE) channel among the non-primary channels.

In step S3010, the transmitting station (STA) performs back-off for a first non-primary channel.

In step S3020, the transmitting STA performs channel access for a second non-primary channel based on a back-off value for the first non-primary channel being 0.

In step S3030, the transmitting STA receives a PPDU from a receiving STA through an IDLE channel among the first and second non-primary channels.

The first non-primary channel is a secondary 20MHz channel capable of performing the back-off while a network allocation vector (NAV) is set in a primary 20MHz channel.

The second non-primary channel is a remaining secondary channel in a basic service set (BSS) operating channel excluding the first non-primary channel.

A configuration of the first and second non-primary channels is determined based on a size of the BSS operating channel and a location of the first non-primary channel.

For example, this embodiment proposes a method of performing channel access for a non-primary channel (or secondary channel) in a situation where a NAV (here, a Basic NAV) is set in the primary 20MHz channel. However, a channel configuration may be newly defined to access the non-primary channel (or secondary channel), and rules may be defined regarding which channels to include in the non-primary channel (or secondary channel) to transmit/receive PPDUs having various bandwidth sizes. For example, this embodiment defines the configuration of channels to be used for non-primary channel access, so that back-off may be performed based on the non-primary channel based on this, and there is an effect that PPDUs may be transmitted and received in a wider bandwidth by performing clear channel assessment (CCA) for other non-primary channels.

Specific embodiments for determining the configuration (or arrangement) of the first and second non-primary channels are as follows.

Based on the size of the BSS operating channel being 160MHz, the second non-primary channel may include a non-primary channel access (NPCA) 20MHz channel, an NPCA 40MHz channel and an NPCA 80MHz channel. The non-primary channel and the NPCA channel may also be denoted as secondary channel access (SCA) channels.

The NPCA 20MHz channel may be a channel to configure a 40MHz channel capable of transmitting the PPDU together with the first non-primary channel. The NPCA 40MHz channel may be a channel to configure an 80MHz channel capable of transmitting the PPDU together with the 40MHz channel. The NPCA 80MHz channel may be a channel to configure a 160MHz channel capable of transmitting the PPDU together with the 80MHz channel. The 40MHz channel may be denoted as an SCA P40 (primary 40MHz) channel. The 80MHz channel may be denoted as an SCA P80 channel. The 160MHz channel may be denoted as an SCA P160 channel. A 320MHz channel to be described later may be denoted as an SCA P320 channel.

Based on the size of the BSS operating channel being 160MHz, the BSS operating channel may include first to eighth 20MHz channels, and it may be assumed that the first to eighth 20MHz channels are arranged in order from the lowest frequency to the highest frequency.

As an example, the first non-primary channel may be located in the 20MHz channel with the second lowest frequency (the second 20MHz channel) among the BSS operating channels. The primary 20MHz channel may be located in the 20MHz channel with the lowest frequency (the first 20MHz channel) among the BSS operating channels.

At this time, based on only the first non-primary channel being IDLE, the PPDU may be transmitted through the first non-primary channel. For example, the PPDU may be transmitted using only the second 20MHz channel.

Based on the first non-primary channel and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 40MHz channel, and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

As another example, the first non-primary channel may be located in the 20MHz channel with the third lowest frequency (the third 20MHz channel) among the BSS operating channels. The primary 20MHz channel may be located in the 20MHz channel with the lowest frequency (the first 20MHz channel) among the BSS operating channels.

At this time, based on only the first non-primary channel being IDLE, the PPDU may be transmitted through the first non-primary channel. For example, the PPDU may be transmitted using only the third 20MHz channel.

Based on the first non-primary channel and the NPCA 20MHz channel being IDLE, the PPDU may be transmitted through the 40MHz channel. For example, the PPDU may be transmitted using the third and fourth 20MHz channels.

Based on the first non-primary channel, the NPCA 20MHz channel and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 20MHz channel, the NPCA 40MHz channel and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

As another example, the first non-primary channel may be located in the 20MHz channel with the fifth lowest frequency (the fifth 20MHz channel) among the BSS operating channels. The primary 20MHz channel may be located in the 20MHz channel with the lowest frequency (the first 20MHz channel) among the BSS operating channels.

Based on only the first non-primary channel being IDLE, the PPDU may be transmitted through the first non-primary channel. For example, the PPDU may be transmitted using only the fifth 20MHz channel.

Based on the first non-primary channel and the NPCA 20MHz channel being IDLE, the PPDU may be transmitted through the 40MHz channel. For example, the PPDU may be transmitted using the fifth and sixth 20MHz channels.

Based on the first non-primary channel, the NPCA 20MHz channel and the NPCA 40MHz channel being IDLE, the PPDU may be transmitted through the 80MHz channel. For example, the PPDU may be transmitted using the fifth to eighth 20MHz channels.

Based on the first non-primary channel, the NPCA 20MHz channel, the NPCA 40MHz channel, and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

Also, based on the size of the BSS operating channel being 320MHz, the second non-primary channel may include an NPCA 20MHz channel, an NPCA 40MHz channel, an NPCA 80MHz channel, and an NPCA 160MHz channel.

The NPCA 20MHz channel may be a channel to configure a 40MHz channel capable of transmitting the PPDU together with the first non-primary channel. The NPCA 40MHz channel may be a channel to configure an 80MHz channel capable of transmitting the PPDU together with the 40MHz channel. The NPCA 80MHz channel may be a channel to configure a 160MHz channel capable of transmitting the PPDU together with the 80MHz channel. The NPCA 160MHz channel may be a channel to configure a 320MHz channel capable of transmitting the PPDU together with the 160MHz channel.

Based on the size of the BSS operating channel being 320MHz, the BSS operating channel may include first to sixteenth 20MHz channels, and it may be assumed that the first to sixteenth 20MHz channels are arranged in order from the lowest frequency to the highest frequency.

As an example, the first non-primary channel may be located in the 20MHz channel with the second lowest frequency (the second 20MHz channel) among the BSS operating channels. The primary 20MHz channel may be located in the 20MHz channel with the lowest frequency (the first 20MHz channel) among the BSS operating channels.

At this time, based on only the first non-primary channel being IDLE, the PPDU may be transmitted through the first non-primary channel. For example, the PPDU may be transmitted using only the second 20MHz channel.

Based on the first non-primary channel and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 40MHz channel and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

Based on the first non-primary channel, the NPCA 40MHz channel, the NPCA 80MHz channel and the NPCA 160MHz channel being IDLE, the PPDU is transmitted through the 320MHz channel, and the PPDU may include information that the primary 20MHz channel included in the 320MHz channel is punctured. For example, the PPDU may be transmitted through the second to sixteenth 20MHz channels, excluding the first 20MHz channel, among the 320MHz channels.

As another example, the first non-primary channel may be located in the 20MHz channel with the third lowest frequency (the third 20MHz channel) among the BSS operating channels. The primary 20MHz channel may be located in the 20MHz channel with the lowest frequency (the first 20MHz channel) among the BSS operating channels.

Based on only the first non-primary channel being IDLE, the PPDU may be transmitted through the first non-primary channel. For example, the PPDU may be transmitted using only the third 20MHz channel.

Based on the first non-primary channel and the NPCA 20MHz channel being IDLE, the PPDU may be transmitted through the 40MHz channel. For example, the PPDU may be transmitted using the third and fourth 20MHz channels.

Based on the first non-primary channel, the NPCA 20MHz channel, and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 20MHz channel, the NPCA 40MHz channel and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

Based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU may include information that the primary 20MHz channel included in the 320MHz channel is punctured. For example, the PPDU may be transmitted through the second to sixteenth 20MHz channels, excluding the first 20MHz channel, among the 320MHz channels.

As another example, the first non-primary channel may be located in the 20MHz channel with the ninth lowest frequency (the ninth 20MHz channel) among the BSS operating channels. The primary 20MHz channel may be located in the 20MHz channel with the lowest frequency (the first 20MHz channel) among the BSS operating channels.

Based on only the first non-primary channel being IDLE, the PPDU may be transmitted through the first non-primary channel. For example, the PPDU may be transmitted using only the ninth 20MHz channel.

Based on the first non-primary channel and the NPCA 20MHz channel being IDLE, the PPDU may be transmitted through the 40MHz channel. For example, the PPDU may be transmitted using the ninth and tenth 20MHz channels.

Based on the first non-primary channel, the NPCA 20MHz channel, and the NPCA 40MHz channel being IDLE, the PPDU may be transmitted through the 80MHz channel. For example, the PPDU may be transmitted using the ninth to twelfth 20MHz channels.

Based on the first non-primary channel, the NPCA 20MHz channel, the NPCA 40MHz channel, and the NPCA 80MHz channel being IDLE, the PPDU may be transmitted through the 160MHz channel. For example, the PPDU may be transmitted using the ninth to sixteenth 20MHz channels.

Based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU may include information that the primary 20MHz channel included in the 320MHz channel is punctured. For example, the PPDU may be transmitted through the second to sixteenth 20MHz channels, excluding the first 20MHz channel, among the 320MHz channels.

According to the above-described embodiments, based on the first and second non-primary channels being arranged in various ways, the method proposed by this disclosure has effects that channels for transmitting/receiving the PPDU may be varied and channel utilization for a wide bandwidth may be adjusted.

FIG. 31 is a flowchart illustrating the procedure for a receiving STA according to this embodiment to access a non-primary channel and transmit a PPDU.

The example of FIG. 31 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 31 is performed by a receiving station (STA), and the receiving STA may correspond to at least one STA. The transmitting STA in FIG. 31 may correspond to an access point (AP).

This embodiment proposes a method for transmitting and receiving a physical layer protocol data unit (PPDU) by performing back-off for a non-primary channel and performing channel access for other non-primary channels based on this. In particular, this embodiment proposes a method for performing channel access for non-primary channels and configuring a channel to transmit a PPDU for an idle (IDLE) channel among the non-primary channels.

In step S3110, the receiving station (STA) performs back-off for a first non-primary channel.

In step S3120, the receiving STA performs channel access for a second non-primary channel based on a back-off value for the first non-primary channel being 0.

In step S3130, the receiving STA transmits a PPDU to a transmitting STA through an IDLE channel among the first and second non-primary channels.

The first non-primary channel is a secondary 20MHz channel capable of performing the back-off while a network allocation vector (NAV) is set in a primary 20MHz channel.

The second non-primary channel is a remaining secondary channel in a basic service set (BSS) operating channel excluding the first non-primary channel.

A configuration of the first and second non-primary channels is determined based on a size of the BSS operating channel and a location of the first non-primary channel.

For example, this embodiment proposes a method of performing channel access for a non-primary channel (or secondary channel) in a situation where a NAV (here, a Basic NAV) is set in the primary 20MHz channel. However, a channel configuration may be newly defined to access the non-primary channel (or secondary channel), and rules may be defined regarding which channels to include in the non-primary channel (or secondary channel) to transmit/receive PPDUs having various bandwidth sizes. For example, this embodiment defines the configuration of channels to be used for non-primary channel access, so that back-off may be performed based on the non-primary channel based on this, and there is an effect that PPDUs may be transmitted and received in a wider bandwidth by performing clear channel assessment (CCA) for other non-primary channels.

Specific embodiments for determining the configuration (or arrangement) of the first and second non-primary channels are as follows.

Based on the size of the BSS operating channel being 160MHz, the second non-primary channel may include a non-primary channel access (NPCA) 20MHz channel, an NPCA 40MHz channel and an NPCA 80MHz channel. The non-primary channel and the NPCA channel may also be denoted as secondary channel access (SCA) channels.

The NPCA 20MHz channel may be a channel to configure a 40MHz channel capable of transmitting the PPDU together with the first non-primary channel. The NPCA 40MHz channel may be a channel to configure an 80MHz channel capable of transmitting the PPDU together with the 40MHz channel. The NPCA 80MHz channel may be a channel to configure a 160MHz channel capable of transmitting the PPDU together with the 80MHz channel. The 40MHz channel may be denoted as an SCA P40 (primary 40MHz) channel. The 80MHz channel may be denoted as an SCA P80 channel. The 160MHz channel may be denoted as an SCA P160 channel. A 320MHz channel to be described later may be denoted as an SCA P320 channel.

Based on the size of the BSS operating channel being 160MHz, the BSS operating channel may include first to eighth 20MHz channels, and it may be assumed that the first to eighth 20MHz channels are arranged in order from the lowest frequency to the highest frequency.

As an example, the first non-primary channel may be located in the 20MHz channel with the second lowest frequency (the second 20MHz channel) among the BSS operating channels. The primary 20MHz channel may be located in the 20MHz channel with the lowest frequency (the first 20MHz channel) among the BSS operating channels.

At this time, based on only the first non-primary channel being IDLE, the PPDU may be transmitted through the first non-primary channel. For example, the PPDU may be transmitted using only the second 20MHz channel.

Based on the first non-primary channel and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 40MHz channel, and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

As another example, the first non-primary channel may be located in the 20MHz channel with the third lowest frequency (the third 20MHz channel) among the BSS operating channels. The primary 20MHz channel may be located in the 20MHz channel with the lowest frequency (the first 20MHz channel) among the BSS operating channels.

At this time, based on only the first non-primary channel being IDLE, the PPDU may be transmitted through the first non-primary channel. For example, the PPDU may be transmitted using only the third 20MHz channel.

Based on the first non-primary channel and the NPCA 20MHz channel being IDLE, the PPDU may be transmitted through the 40MHz channel. For example, the PPDU may be transmitted using the third and fourth 20MHz channels.

Based on the first non-primary channel, the NPCA 20MHz channel and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 20MHz channel, the NPCA 40MHz channel and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

As another example, the first non-primary channel may be located in the 20MHz channel with the fifth lowest frequency (the fifth 20MHz channel) among the BSS operating channels. The primary 20MHz channel may be located in the 20MHz channel with the lowest frequency (the first 20MHz channel) among the BSS operating channels.

Based on only the first non-primary channel being IDLE, the PPDU may be transmitted through the first non-primary channel. For example, the PPDU may be transmitted using only the fifth 20MHz channel.

Based on the first non-primary channel and the NPCA 20MHz channel being IDLE, the PPDU may be transmitted through the 40MHz channel. For example, the PPDU may be transmitted using the fifth and sixth 20MHz channels.

Based on the first non-primary channel, the NPCA 20MHz channel and the NPCA 40MHz channel being IDLE, the PPDU may be transmitted through the 80MHz channel. For example, the PPDU may be transmitted using the fifth to eighth 20MHz channels.

Based on the first non-primary channel, the NPCA 20MHz channel, the NPCA 40MHz channel, and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

Also, based on the size of the BSS operating channel being 320MHz, the second non-primary channel may include an NPCA 20MHz channel, an NPCA 40MHz channel, an NPCA 80MHz channel, and an NPCA 160MHz channel.

The NPCA 20MHz channel may be a channel to configure a 40MHz channel capable of transmitting the PPDU together with the first non-primary channel. The NPCA 40MHz channel may be a channel to configure an 80MHz channel capable of transmitting the PPDU together with the 40MHz channel. The NPCA 80MHz channel may be a channel to configure a 160MHz channel capable of transmitting the PPDU together with the 80MHz channel. The NPCA 160MHz channel may be a channel to configure a 320MHz channel capable of transmitting the PPDU together with the 160MHz channel.

Based on the size of the BSS operating channel being 320MHz, the BSS operating channel may include first to sixteenth 20MHz channels, and it may be assumed that the first to sixteenth 20MHz channels are arranged in order from the lowest frequency to the highest frequency.

As an example, the first non-primary channel may be located in the 20MHz channel with the second lowest frequency (the second 20MHz channel) among the BSS operating channels. The primary 20MHz channel may be located in the 20MHz channel with the lowest frequency (the first 20MHz channel) among the BSS operating channels.

At this time, based on only the first non-primary channel being IDLE, the PPDU may be transmitted through the first non-primary channel. For example, the PPDU may be transmitted using only the second 20MHz channel.

Based on the first non-primary channel and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 40MHz channel and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

Based on the first non-primary channel, the NPCA 40MHz channel, the NPCA 80MHz channel and the NPCA 160MHz channel being IDLE, the PPDU is transmitted through the 320MHz channel, and the PPDU may include information that the primary 20MHz channel included in the 320MHz channel is punctured. For example, the PPDU may be transmitted through the second to sixteenth 20MHz channels, excluding the first 20MHz channel, among the 320MHz channels.

As another example, the first non-primary channel may be located in the 20MHz channel with the third lowest frequency (the third 20MHz channel) among the BSS operating channels. The primary 20MHz channel may be located in the 20MHz channel with the lowest frequency (the first 20MHz channel) among the BSS operating channels.

Based on only the first non-primary channel being IDLE, the PPDU may be transmitted through the first non-primary channel. For example, the PPDU may be transmitted using only the third 20MHz channel.

Based on the first non-primary channel and the NPCA 20MHz channel being IDLE, the PPDU may be transmitted through the 40MHz channel. For example, the PPDU may be transmitted using the third and fourth 20MHz channels.

Based on the first non-primary channel, the NPCA 20MHz channel, and the NPCA 40MHz channel being IDLE, the PPDU is transmitted through the 80MHz channel, and the PPDU may include information that the primary 20MHz channel included in the 80MHz channel is punctured. For example, the PPDU may be transmitted through the second to fourth 20MHz channels, excluding the first 20MHz channel, among the 80MHz channels.

Based on the first non-primary channel, the NPCA 20MHz channel, the NPCA 40MHz channel and the NPCA 80MHz channel being IDLE, the PPDU is transmitted through the 160MHz channel, and the PPDU may include information that the primary 20MHz channel included in the 160MHz channel is punctured. For example, the PPDU may be transmitted through the second to eighth 20MHz channels, excluding the first 20MHz channel, among the 160MHz channels.

Based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU may include information that the primary 20MHz channel included in the 320MHz channel is punctured. For example, the PPDU may be transmitted through the second to sixteenth 20MHz channels, excluding the first 20MHz channel, among the 320MHz channels.

As another example, the first non-primary channel may be located in the 20MHz channel with the ninth lowest frequency (the ninth 20MHz channel) among the BSS operating channels. The primary 20MHz channel may be located in the 20MHz channel with the lowest frequency (the first 20MHz channel) among the BSS operating channels.

Based on only the first non-primary channel being IDLE, the PPDU may be transmitted through the first non-primary channel. For example, the PPDU may be transmitted using only the ninth 20MHz channel.

Based on the first non-primary channel and the NPCA 20MHz channel being IDLE, the PPDU may be transmitted through the 40MHz channel. For example, the PPDU may be transmitted using the ninth and tenth 20MHz channels.

Based on the first non-primary channel, the NPCA 20MHz channel, and the NPCA 40MHz channel being IDLE, the PPDU may be transmitted through the 80MHz channel. For example, the PPDU may be transmitted using the ninth to twelfth 20MHz channels.

Based on the first non-primary channel, the NPCA 20MHz channel, the NPCA 40MHz channel, and the NPCA 80MHz channel being IDLE, the PPDU may be transmitted through the 160MHz channel. For example, the PPDU may be transmitted using the ninth to sixteenth 20MHz channels.

Based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU may include information that the primary 20MHz channel included in the 320MHz channel is punctured. For example, the PPDU may be transmitted through the second to sixteenth 20MHz channels, excluding the first 20MHz channel, among the 320MHz channels.

According to the above-described embodiments, based on the first and second non-primary channels being arranged in various ways, the method proposed by this disclosure has effects that channels for transmitting/receiving the PPDU may be varied and channel utilization for a wide bandwidth may be adjusted.

### < Device configuration>

The technical features of this specification described above may be applied to various devices and methods. For example, the technical features of this specification described above may be performed/supported through the device of FIG. 1 and/or FIG. 14. For example, the technical features of this specification described above may be applied to only a part of FIG. 1 and/or FIG. 14. For example, the technical features of this specification described above may be implemented based on the processing chips (114 and 124) of FIG. 1, implemented based on the processors (111 and 121) and the memories (112 and 122) of FIG. 1, or implemented based on the processor (610) and the memory (620) of FIG. 14. For example, the device of this specification performs back-off for a first non-primary channel; based on a back-off value for the first non-primary channel being 0, performs channel access for a second non-primary channel; and transmits a physical layer protocol data unit (PPDU) to a transmitting station (STA) through an IDLE channel among the first and second non-primary channels.

The technical features of this specification may be implemented based on a computer readable medium (CRM). For example, the CRM proposed by this specification is at least one computer readable medium (CRM) including instructions based on being executed by at least one processor.

The CRM may store instructions for performing operations including: performing back-off for a first non-primary channel from a transmitting station (STA); based on a back-off value for the first non-primary channel being 0, performing channel access for a second non-primary channel; and transmitting a PPDU to a transmitting STA through an IDLE channel among the first and second non-primary channels. The instructions stored in the CRM of this specification may be executed by at least one processor. At least one processor related to the CRM of this specification may be the processors (111 and 121) or processing chips (114 and 124) of FIG. 1, or the processor (610) of FIG. 14. Meanwhile, the CRM of this specification may be the memories (112 and 122) of FIG. 1, the memory (620) of FIG. 14, or a separate external memory/storage medium/disk, etc.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
performing, by a receiving station (STA), back-off for a first non-primary channel;
performing, by the receiving STA, channel access for a second non-primary channel based on a back-off value for the first non-primary channel being 0; and
transmitting, by the receiving STA, a physical layer protocol data unit (PPDU) to a transmitting STA through an IDLE channel among the first and second non-primary channels,
wherein the first non-primary channel is a secondary 20MHz channel capable of performing the back-off while a network allocation vector (NAV) is set in a primary 20MHz channel,
wherein the second non-primary channel is a remaining secondary channel in a basic service set (BSS) operating channel excluding the first non-primary channel, and
wherein a configuration of the first and second non-primary channels is determined based on a size of the BSS operating channel and a location of the first non-primary channel.

2. The method of claim 1, wherein based on the size of the BSS operating channel being 160MHz,
the second non-primary channel includes a non-primary channel access (NPCA) 20MHz channel, an NPCA 40MHz channel and an NPCA 80MHz channel,
the NPCA 20MHz channel is a channel to configure a 40MHz channel capable of transmitting the PPDU together with the first non-primary channel,
the NPCA 40MHz channel is a channel to configure an 80MHz channel capable of transmitting the PPDU together with the 40MHz channel, and
the NPCA 80MHz channel is a channel to configure a 160MHz channel capable of transmitting the PPDU together with the 80MHz channel.

3. The method of claim 2, wherein the first non-primary channel is located in a 20MHz channel with the second lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 40MHz channel being IDLE, the PPDU is transmitted through the 80MHz channel, and the PPDU includes information that the primary 20MHz channel included in the 80MHz channel is punctured, and
wherein based on the first non-primary channel, the NPCA 40MHz channel and the NPCA 80MHz channel being IDLE, the PPDU is transmitted through the 160MHz channel, and the PPDU includes information that the primary 20MHz channel included in the 160MHz channel is punctured.

4. The method of claim 2, wherein the first non-primary channel is located in a 20MHz channel with the third lowest frequency among the BSS operating channel,
wherein the primary 20MHz channel is located in a 20MHz channel with the lowest frequency among the BSS operating channel,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel, and the PPDU includes information that the primary 20MHz channel included in the 80MHz channel is punctured, and
wherein based on the first non-primary channel, the NPCA 20MHz channel, the NPCA 40MHz channel and the NPCA 80MHz channel being IDLE, the PPDU is transmitted through the 160MHz channel, and the PPDU includes information that the primary 20MHz channel included in the 160MHz channel is punctured.

5. The method of claim 2, wherein the first non-primary channel is located in a 20MHz channel with the fifth lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel, and
wherein based on the first non-primary channel, the NPCA 20MHz channel, the NPCA 40MHz channel and the NPCA 80MHz channel being IDLE, the PPDU is transmitted through the 160MHz channel, and the PPDU includes information that the primary 20MHz channel included in the 160MHz channel is punctured.

6. The method of claim 1, wherein based on the size of the BSS operating channel being 320MHz,
the second non-primary channel includes an NPCA 20MHz channel, an NPCA 40MHz channel, an NPCA 80MHz channel and an NPCA 160MHz channel,
the NPCA 20MHz channel is a channel to configure a 40MHz channel capable of transmitting the PPDU together with the first non-primary channel,
the NPCA 40MHz channel is a channel to configure an 80MHz channel capable of transmitting the PPDU together with the 40MHz channel,
the NPCA 80MHz channel is a channel to configure a 160MHz channel capable of transmitting the PPDU together with the 80MHz channel, and
the NPCA 160MHz channel is a channel to configure a 320MHz channel capable of transmitting the PPDU together with the 160MHz channel.

7. The method of claim 6, wherein the first non-primary channel is located in a 20MHz channel with the second lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 40MHz channel being IDLE, the PPDU is transmitted through the 80MHz channel, and the PPDU includes information that the primary 20MHz channel included in the 80MHz channel is punctured,
wherein based on the first non-primary channel, the NPCA 40MHz channel and the NPCA 80MHz channel being IDLE, the PPDU is transmitted through the 160MHz channel, and the PPDU includes information that the primary 20MHz channel included in the 160MHz channel is punctured, and
wherein based on the first non-primary channel, the NPCA 40MHz channel, the NPCA 80MHz channel and the NPCA 160MHz channel being IDLE, the PPDU is transmitted through the 320MHz channel, and the PPDU includes information that the primary 20MHz channel included in the 320MHz channel is punctured.

8. The method of claim 6, wherein the first non-primary channel is located in a 20MHz channel with the third lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel, and the PPDU includes information that the primary 20MHz channel included in the 80MHz channel is punctured,
wherein based on the first non-primary channel, the NPCA 20MHz channel, the NPCA 40MHz channel and the NPCA 80MHz channel being IDLE, the PPDU is transmitted through the 160MHz channel, and the PPDU includes information that the primary 20MHz channel included in the 160MHz channel is punctured, and
wherein based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU includes information that the primary 20MHz channel included in the 320MHz channel is punctured.

9. The method of claim 6, wherein the first non-primary channel is located in a 20MHz channel with the fifth lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel,
wherein based on the first non-primary channel, the NPCA 20MHz channel, the NPCA 40MHz channel and the NPCA 80MHz channel being IDLE, the PPDU is transmitted through the 160MHz channel, and the PPDU includes information that the primary 20MHz channel included in the 160MHz channel is punctured, and
wherein based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU includes information that the primary 20MHz channel included in the 320MHz channel is punctured.

10. The method of claim 6, wherein the first non-primary channel is located in a 20MHz channel with the ninth lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel,
wherein based on the first non-primary channel, the NPCA 20MHz channel, the NPCA 40MHz channel and the NPCA 80MHz channel being IDLE, the PPDU is transmitted through the 160MHz channel, and
wherein based on the first non-primary channel, the NPCA 20MHz channel, the NPCA 40MHz channel, the NPCA 80MHz channel and the NPCA 160MHz channel being IDLE, the PPDU is transmitted through the 320MHz channel, and the PPDU includes information that the primary 20MHz channel included in the 320MHz channel is punctured.

11. A receiving station (STA) in a wireless local area network (WLAN) system, the receiving STA comprising:
a memory;
a transceiver; and
a processor being operatively connected to the memory and the transceiver,
wherein the processor is configured to:
perform back-off for a first non-primary channel;
perform channel access for a second non-primary channel based on a back-off value for the first non-primary channel being 0; and
transmit a physical layer protocol data unit (PPDU) to a transmitting STA through an IDLE channel among the first and second non-primary channels,
wherein the first non-primary channel is a secondary 20MHz channel capable of performing the back-off while a network allocation vector (NAV) is set in a primary 20MHz channel,
wherein the second non-primary channel is a remaining secondary channel in a basic service set (BSS) operating channel excluding the first non-primary channel, and
wherein a configuration of the first and second non-primary channels is determined based on a size of the BSS operating channel and a location of the first non-primary channel.

12. A method in a wireless local area network (WLAN) system, the method comprising:
performing, by a transmitting station (STA), back-off for a first non-primary channel;
performing, by the transmitting STA, channel access for a second non-primary channel based on a back-off value for the first non-primary channel being 0; and
receiving, by the transmitting STA, a physical layer protocol data unit (PPDU) from a receiving STA through an IDLE channel among the first and second non-primary channels,
wherein the first non-primary channel is a secondary 20MHz channel capable of performing the back-off while a network allocation vector (NAV) is set in a primary 20MHz channel,
wherein the second non-primary channel is a remaining secondary channel in a basic service set (BSS) operating channel excluding the first non-primary channel, and
wherein a configuration of the first and second non-primary channels is determined based on a size of the BSS operating channel and a location of the first non-primary channel.

13. The method of claim 12, wherein based on the size of the BSS operating channel being 160MHz,
the second non-primary channel includes a non-primary channel access (NPCA) 20MHz channel, an NPCA 40MHz channel and an NPCA 80MHz channel,
the NPCA 20MHz channel is a channel to configure a 40MHz channel capable of transmitting the PPDU together with the first non-primary channel,
the NPCA 40MHz channel is a channel to configure an 80MHz channel capable of transmitting the PPDU together with the 40MHz channel, and
the NPCA 80MHz channel is a channel to configure a 160MHz channel capable of transmitting the PPDU together with the 80MHz channel.

14. The method of claim 13, wherein the first non-primary channel is located in a 20MHz channel with the second lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 40MHz channel being IDLE, the PPDU is transmitted through the 80MHz channel, and the PPDU includes information that the primary 20MHz channel included in the 80MHz channel is punctured, and
wherein based on the first non-primary channel, the NPCA 40MHz channel and the NPCA 80MHz channel being IDLE, the PPDU is transmitted through the 160MHz channel, and the PPDU includes information that the primary 20MHz channel included in the 160MHz channel is punctured.

15. The method of claim 13, wherein the first non-primary channel is located in a 20MHz channel with the third lowest frequency among the BSS operating channel,
wherein the primary 20MHz channel is located in a 20MHz channel with the lowest frequency among the BSS operating channel,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel, and the PPDU includes information that the primary 20MHz channel included in the 80MHz channel is punctured, and
wherein based on the first non-primary channel, the NPCA 20MHz channel, the NPCA 40MHz channel and the NPCA 80MHz channel being IDLE, the PPDU is transmitted through the 160MHz channel, and the PPDU includes information that the primary 20MHz channel included in the 160MHz channel is punctured.

16. The method of claim 13, wherein the first non-primary channel is located in a 20MHz channel with the fifth lowest frequency among the BSS operating channels,
wherein the primary 20MHz channel is located in a 20MHz channel with the lowest frequency among the BSS operating channels,
wherein based on only the first non-primary channel being IDLE, the PPDU is transmitted through the first non-primary channel,
wherein based on the first non-primary channel and the NPCA 20MHz channel being IDLE, the PPDU is transmitted through the 40MHz channel,
wherein based on the first non-primary channel, the NPCA 20MHz channel and the NPCA 40MHz channel being IDLE, the PPDU is transmitted through the 80MHz channel, and
wherein based on the first non-primary channel, the NPCA 20MHz channel, the NPCA 40MHz channel and the NPCA 80MHz channel being IDLE, the PPDU is transmitted through the 160MHz channel, and the PPDU includes information that the primary 20MHz channel included in the 160MHz channel is punctured.

17. The method of claim 12, wherein based on the size of the BSS operating channel being 320MHz,
the second non-primary channel includes an NPCA 20MHz channel, an NPCA 40MHz channel, an NPCA 80MHz channel and an NPCA 160MHz channel,
the NPCA 20MHz channel is a channel to configure a 40MHz channel capable of transmitting the PPDU together with the first non-primary channel,
the NPCA 40MHz channel is a channel to configure an 80MHz channel capable of transmitting the PPDU together with the 40MHz channel,
the NPCA 80MHz channel is a channel to configure a 160MHz channel capable of transmitting the PPDU together with the 80MHz channel, and
the NPCA 160MHz channel is a channel to configure a 320MHz channel capable of transmitting the PPDU together with the 160MHz channel.

18. A transmitting station (STA) in a wireless local area network (WLAN) system, the transmitting STA comprising:
a memory;
a transceiver; and
a processor being operatively connected to the memory and the transceiver,
wherein the processor is configured to:
perform back-off for a first non-primary channel;
perform channel access for a second non-primary channel based on a back-off value for the first non-primary channel being 0; and
receive a physical layer protocol data unit (PPDU) from a receiving STA through an IDLE channel among the first and second non-primary channels,
wherein the first non-primary channel is a secondary 20MHz channel capable of performing the back-off while a network allocation vector (NAV) is set in a primary 20MHz channel,
wherein the second non-primary channel is a remaining secondary channel in a basic service set (BSS) operating channel excluding the first non-primary channel, and
wherein a configuration of the first and second non-primary channels is determined based on a size of the BSS operating channel and a location of the first non-primary channel.

19. A computer readable medium including an instruction being executed by at least one processor and performing a method comprising the steps of:
performing back-off for a first non-primary channel;
performing channel access for a second non-primary channel based on a back-off value for the first non-primary channel being 0; and
transmitting a physical layer protocol data unit (PPDU) to a transmitting station (STA) through an IDLE channel among the first and second non-primary channels,
wherein the first non-primary channel is a secondary 20MHz channel capable of performing the back-off while a network allocation vector (NAV) is set in a primary 20MHz channel,
wherein the second non-primary channel is a remaining secondary channel in a basic service set (BSS) operating channel excluding the first non-primary channel, and
wherein a configuration of the first and second non-primary channels is determined based on a size of the BSS operating channel and a location of the first non-primary channel.

20. A device in a wireless local area network (WLAN) system, the device comprising:
a memory; and
a processor being operatively connected to the memory,
wherein the processor is configured to:
perform back-off for a first non-primary channel;
perform channel access for a second non-primary channel based on a back-off value for the first non-primary channel being 0; and
transmit a physical layer protocol data unit (PPDU) to a transmitting station (STA) through an IDLE channel among the first and second non-primary channels,
wherein the first non-primary channel is a secondary 20MHz channel capable of performing the back-off while a network allocation vector (NAV) is set in a primary 20MHz channel,
wherein the second non-primary channel is a remaining secondary channel in a basic service set (BSS) operating channel excluding the first non-primary channel, and
wherein a configuration of the first and second non-primary channels is determined based on a size of the BSS operating channel and a location of the first non-primary channel.
